# EUROPEAN PATENT APPLICATION

(11) **EP 3 528 544 A1**
(43) Date of publication of application: **21.08.2019**
(21) Application number: 16919621.9
(22) Date of filing: 31.10.2016
(51) Int. Cl.: H04W 36/16

(54) **FREQUENCY SPECTRUM RESOURCE INDICATION METHOD, APPARATUS AND SYSTEM**

(71) Applicant: Huawei Technologies Co., Ltd., Longgang District Shenzhen, Guangdong 518129 (CN)
(72) Inventor: YU, Haifeng, Shenzhen Guangdong 518129 (CN); YU, Feng, Shenzhen Guangdong 518129 (CN); YU, Guangwei, Shenzhen Guangdong 518129 (CN); ZHANG, Wurong, Shenzhen Guangdong 518129 (CN)
(74) Representative: Körber, Martin Hans
(86) International application number: PCT/CN2016/104158
(87) International publication number: WO 2018/076386

(57) **Abstract**

Embodiments of the present invention relate to the field of communications technologies, and provide a spectrum resource indication method, an apparatus, and a system, to improve data transmission efficiency. The method includes: obtaining, by an access network device, a spectrum resource supporting capability of a terminal device and a service requirement of the terminal device; determining, by the access network device, spectrum resource information for the terminal device based on the spectrum resource supporting capability of the terminal device and the service requirement of the terminal device; and sending, by the access network device, a spectrum resource indication message to the terminal device, where the spectrum resource indication message is used to indicate the spectrum resource information.

## Description

### TECHNICAL FIELD

The present invention relates to the communications field, and in particular, to a spectrum resource indication method, an apparatus, and a system.

### BACKGROUND

With continuous development of communications technologies, the Internet of Things develops rapidly. Because an increasing quantity of terminal devices (terminal equipment) access the Internet of Things, and service requirements of different terminal devices accessing the Internet of Things are significantly different, spectrum resources are certainly strained. Therefore, how to properly use a spectrum resource on the Internet of Things becomes a problem that needs to be urgently resolved.

Existing spectrum resources include a licensed spectrum resource and an unlicensed spectrum resource. Generally, in application of the unlicensed spectrum resource, all terminal devices in a coverage area of a same access network device contend for an unlicensed frequency band in the unlicensed spectrum resource only in a listen before talk (listen before talk, LBT) manner or a low duty cycle (low duty cycle) manner, and send data in the unlicensed frequency band. The LBT manner is as follows: Before sending data, a terminal device detects, through listening, whether the unlicensed frequency band is idle. The terminal device sends the data by using the unlicensed frequency band only when the unlicensed frequency band is detected through listening. The low duty cycle manner is as follows: A terminal device sends data by directly using the unlicensed frequency band. However, a time that the terminal device spends in sending the data by using the unlicensed frequency band cannot exceed a preset time.

However, in the foregoing application of the unlicensed spectrum resource, because all the terminal devices in the coverage area of the same access network device contend for a frequency band in the unlicensed spectrum resource only in the LBT manner or the low duty cycle manner, a plurality of terminal devices may simultaneously obtain a same frequency band in the unlicensed spectrum resource through contention, and the plurality of terminal devices may simultaneously send data in the frequency band. Consequently, data of some terminal devices may fail to be sent, and data transmission efficiency is reduced.

### SUMMARY

This application provides a spectrum resource indication method, an apparatus, and a system, to improve data transmission efficiency.

To achieve the foregoing objective, the following technical solutions are used in embodiments of the present invention:

According to a first aspect, a spectrum resource indication method is provided. The method includes: obtaining, by an access network device, a spectrum resource supporting capability of a terminal device and a service requirement of the terminal device; determining, by the access network device, spectrum resource information for the terminal device based on the spectrum resource supporting capability of the terminal device and the service requirement of the terminal device; and sending, by the access network device to the terminal device, a spectrum resource indication message used to indicate the spectrum resource information.

In this application, the access network device may determine the spectrum resource information for the terminal device based on the spectrum resource supporting capability of the terminal device and the service requirement of the terminal device, and indicate the spectrum resource information to the terminal device, so that the terminal device can transmit, based on the spectrum resource information indicated by the access network device, a service to be transmitted by the terminal device. In this solution, because the access network device may configure different spectrum resource information for different terminal devices in a coverage area of the access network device based on spectrum resource supporting capabilities of the terminal devices and service requirements of the terminal devices, in application of an unlicensed spectrum resource, some terminal devices in a coverage area of a same access network device may contend for a frequency band in the unlicensed spectrum resource in an LBT manner, and other terminal devices may contend for a frequency band in the unlicensed spectrum resource in a low duty cycle manner. In this way, cases in which a plurality of terminal devices simultaneously obtain a same frequency band in the unlicensed spectrum resource through contention can be reduced or avoided, so that data transmission efficiency can be improved.

In a first possible implementation of the first aspect, the service requirement of the terminal device includes at least a transmission delay requirement of a service historically transmitted by the terminal device. The access network device determines that the terminal device is to use an unlicensed spectrum resource or alternately use a licensed spectrum resource and an unlicensed spectrum resource; and the access network device determines, based on the transmission delay requirement of the service historically transmitted by the terminal device, that a manner of using an unlicensed spectrum resource by the terminal device is an LBT manner or a low duty cycle manner.

In a second possible implementation of the first aspect, the method for obtaining, by an access network device, a spectrum resource supporting capability of a terminal device and a service requirement of the terminal device may include: receiving, by the access network device, a spectrum resource switching request message that is sent by the terminal device and includes the spectrum resource supporting capability of the terminal device and the service requirement of the terminal device.

When signal transmission quality of a frequency band (for example, a frequency band in a licensed spectrum resource or a frequency band in an unlicensed spectrum resource) currently used by the terminal device is relatively poor (for example, the signal transmission quality of the frequency band currently used by the terminal device is less than or equal to a preset threshold), the terminal device may send the spectrum resource switching request message to the access network device to request the access network device to redetermine spectrum resource information for the terminal device. Therefore, after receiving the spectrum resource switching request, the access network device may allocate spectrum resource information to the terminal device based on the spectrum resource supporting capability of the terminal device and the service requirement of the terminal device. In this way, when the signal transmission quality of the frequency band currently used by the terminal device is relatively poor, new spectrum resource information can be redetermined for the terminal device in a timely manner, so that data transmission efficiency of the terminal device is ensured.

In a third possible implementation of the first aspect, the spectrum resource switching request message further includes a measurement report obtained after the terminal device measures a frequency band currently used by the terminal device. Before the receiving, by the access network device, a spectrum resource switching request message sent by the terminal device, the spectrum resource indication method provided in this application may further include: sending, by the access network device to the terminal device, an RRC message that includes measurement configuration information used to instruct the terminal device to measure the frequency band currently used by the terminal device.

Before the access network device receives the spectrum resource switching request message sent by the terminal device, the access network device may further instruct the terminal device to measure the frequency band currently used by the terminal device. Therefore, after measuring the frequency band currently used by the terminal device, the terminal device may add the measurement report obtained through the measurement to the spectrum resource switching request message and send the spectrum resource switching request message to the access network device. In this case, the access network device may learn, based on the measurement report, the signal transmission quality of the frequency band currently used by the terminal device; determine, based on the signal transmission quality of the frequency band currently used by the terminal device, whether the access network device needs to redetermine spectrum resource information for the terminal device; and when the signal transmission quality of the frequency band currently used by the terminal device is relatively poor (for example, the signal transmission quality of the frequency band currently used by the terminal device is less than or equal to a preset threshold), determine that the access network device needs to redetermine spectrum resource information for the terminal device based on the spectrum resource supporting capability of the terminal device and the service requirement of the terminal device. In this way, when the signal transmission quality of the frequency band currently used by the terminal device is relatively poor, new spectrum resource information can be redetermined for the terminal device in a timely manner, so that data transmission efficiency of the terminal device is ensured.

In a fourth possible implementation of the first aspect, the determining, by the access network device, spectrum resource information for the terminal device based on the spectrum resource supporting capability of the terminal device and the service requirement of the terminal device includes: determining, by the access network device based on the spectrum resource supporting capability of the terminal device, that the terminal device supports a licensed spectrum resource and an unlicensed spectrum resource, and a manner, supported by the terminal device, of using an unlicensed spectrum resource includes the LBT manner and the low duty cycle manner; and determining, by the access network device based on the service requirement of the terminal device, a fact that the terminal device is to use a licensed spectrum resource, or a fact that the terminal device is to use an unlicensed spectrum resource and the manner of using an unlicensed spectrum resource, or a fact that the terminal device is to alternately use a licensed spectrum resource and an unlicensed spectrum resource and the manner of using an unlicensed spectrum resource, where the manner of using an unlicensed spectrum resource by the terminal device is the LBT manner or the low duty cycle manner.

According to a second aspect, a spectrum resource indication method is provided. The method includes: sending, by a terminal device to an access network device, a spectrum resource supporting capability of the terminal device and a service requirement of the terminal device that are used by the access network device to determine spectrum resource information for the terminal device; and receiving, by the terminal device, a spectrum resource indication message that is sent by the access network device and used to indicate the spectrum resource information.

In this application, the terminal device may send the spectrum resource supporting capability of the terminal device and the service requirement of the terminal device to the access network device, so that the access network device can determine the spectrum resource information for the terminal device based on the spectrum resource supporting capability of the terminal device and the service requirement of the terminal device, and indicate the spectrum resource information to the terminal device. In this way, the terminal device can transmit, based on the spectrum resource information indicated by the access network device, a service to be transmitted by the terminal device. In this solution, because the access network device may configure different spectrum resource information for different terminal devices in a coverage area of the access network device based on spectrum resource supporting capabilities of the terminal devices and service requirements of the terminal devices, in application of an unlicensed spectrum resource, some terminal devices in a coverage area of a same access network device may contend for a frequency band in the unlicensed spectrum resource in an LBT manner, and other terminal devices may contend for a frequency band in the unlicensed spectrum resource in a low duty cycle manner. In this way, cases in which a plurality of terminal devices simultaneously obtain a same frequency band in the unlicensed spectrum resource through contention can be reduced or avoided, so that data transmission efficiency can be improved.

In a first possible implementation of the second aspect, the method for sending, by a terminal device, a spectrum resource supporting capability of the terminal device and a service requirement of the terminal device to an access network device may include: sending, by the terminal device to the access network device, a spectrum resource switching request message that includes the spectrum resource supporting capability of the terminal device and the service requirement of the terminal device.

When signal transmission quality of a frequency band (for example, a frequency band in a licensed spectrum resource or a frequency band in an unlicensed spectrum resource) currently used by the terminal device is relatively poor (for example, the signal transmission quality of the frequency band currently used by the terminal device is less than or equal to a preset threshold), the terminal device may send the spectrum resource switching request message to the access network device to request the access network device to redetermine spectrum resource information for the terminal device. Therefore, after receiving the spectrum resource switching request, the access network device may allocate spectrum resource information to the terminal device based on the spectrum resource supporting capability of the terminal device and the service requirement of the terminal device. In this way, when the signal transmission quality of the frequency band currently used by the terminal device is relatively poor, new spectrum resource information can be redetermined for the terminal device in a timely manner, so that data transmission efficiency of the terminal device is ensured.

In a second possible implementation of the second aspect, the spectrum resource switching request message further includes a measurement report obtained after the terminal device measures a frequency band currently used by the terminal device. Before the sending, by the terminal device, a spectrum resource switching request message to the access network device, the spectrum resource indication method provided in this application may further include: receiving, by the terminal device, an RRC message that is sent by the access network device and includes measurement configuration information used to instruct the terminal device to measure the frequency band currently used by the terminal device; and measuring, by the terminal device according to the measurement configuration information, the frequency band currently used by the terminal device.

Before the terminal device sends the spectrum resource switching request message to the access network device, the terminal device may further receive the RRC message that is sent by the access network device and includes the measurement configuration information used to instruct the terminal device to measure the frequency band currently used by the terminal device. Therefore, after the terminal device measures the frequency band currently used by the terminal device, the terminal device may add the measurement report obtained through the measurement to the spectrum resource switching request message and send the spectrum resource switching request message to the access network device. In this case, the access network device may learn, based on the measurement report, the signal transmission quality of the frequency band currently used by the terminal device; determine, based on the signal transmission quality of the frequency band currently used by the terminal device, whether the access network device needs to redetermine spectrum resource information for the terminal device; and when the signal transmission quality of the frequency band currently used by the terminal device is relatively poor (for example, the signal transmission quality of the frequency band currently used by the terminal device is less than or equal to a preset threshold), determine that the access network device needs to redetermine spectrum resource information for the terminal device based on the spectrum resource supporting capability of the terminal device and the service requirement of the terminal device. In this way, when the signal transmission quality of the frequency band currently used by the terminal device is relatively poor, new spectrum resource information can be redetermined for the terminal device in a timely manner, so that data transmission efficiency of the terminal device is ensured.

According to a third aspect, an access network device is provided. The access network device includes an obtaining module, a processing module, and a sending module. The obtaining module is configured to obtain a spectrum resource supporting capability of a terminal device and a service requirement of the terminal device; the processing module is configured to determine spectrum resource information for the terminal device based on the spectrum resource supporting capability of the terminal device and the service requirement of the terminal device that are obtained by the obtaining module; and the sending module is configured to send, to the terminal device, a spectrum resource indication message used to indicate the spectrum resource information determined by the processing module.

In a first possible implementation of the third aspect, the service requirement of the terminal device includes at least a transmission delay requirement of a service historically transmitted by the terminal device. The processing module is further configured to: determine that the terminal device is to use an unlicensed spectrum resource or alternately use a licensed spectrum resource and an unlicensed spectrum resource; and determine, based on the transmission delay requirement of the service historically transmitted by the terminal device, that a manner of using an unlicensed spectrum resource by the terminal device is an LBT manner or a low duty cycle manner.

In a second possible implementation of the third aspect, the obtaining module is specifically configured to receive a spectrum resource switching request message that is sent by the terminal device and includes the spectrum resource supporting capability of the terminal device and the service requirement of the terminal device.

In a third possible implementation of the third aspect, the spectrum resource switching request message further includes a measurement report obtained after the terminal device measures a frequency band currently used by the terminal device. The sending module is further configured to: before the obtaining module receives the spectrum resource switching request message sent by the terminal device, send, to the terminal device, an RRC message that includes measurement configuration information used to instruct the terminal device to measure the frequency band currently used by the terminal device.

In a fourth possible implementation of the third aspect, the processing module is specifically configured to: determine, based on the spectrum resource supporting capability of the terminal device, that the terminal device supports a licensed spectrum resource and an unlicensed spectrum resource, and a manner, supported by the terminal device, of using an unlicensed spectrum resource includes the LBT manner and the low duty cycle manner; and determine, based on the service requirement of the terminal device, a fact that the terminal device is to use a licensed spectrum resource, or a fact that the terminal device is to use an unlicensed spectrum resource and the manner of using an unlicensed spectrum resource, or a fact that the terminal device is to alternately use a licensed spectrum resource and an unlicensed spectrum resource and the manner of using an unlicensed spectrum resource, where the manner of using an unlicensed spectrum resource by the terminal device is the LBT manner or the low duty cycle manner.

For detailed description of a technical effect of the third aspect or any one of the possible implementations of the third aspect, refer to related description of a technical effect of the first aspect or any one of the possible implementations of the first aspect. Details are not described herein again.

According to a fourth aspect, a terminal device is provided. The terminal device includes a sending module and a receiving module. The sending module is configured to send, to an access network device, a spectrum resource supporting capability of the terminal device and a service requirement of the terminal device that are used by the access network device to determine spectrum resource information for the terminal device; and the receiving module is configured to receive a spectrum resource indication message that is sent by the access network device and used to indicate the spectrum resource information.

In a first possible implementation of the fourth aspect, the sending module is specifically configured to send, to the access network device, a spectrum resource switching request message that includes the spectrum resource supporting capability of the terminal device and the service requirement of the terminal device.

In a second possible implementation of the fourth aspect, the spectrum resource switching request message further includes a measurement report obtained after the terminal device measures a frequency band currently used by the terminal device, and the terminal device further includes a processing module. The receiving module is further configured to: before the sending module sends the spectrum resource switching request message to the access network device, receive an RRC message that is sent by the access network device and includes measurement configuration information used to instruct the terminal device to measure the frequency band currently used by the terminal device. The processing module is configured to: after the receiving module receives the RRC message, measure, according to the measurement configuration information in the RRC message, the frequency band currently used by the terminal device.

For detailed description of a technical effect of the fourth aspect or either of the possible implementations of the fourth aspect, refer to related description of a technical effect of the second aspect or either of the possible implementations of the second aspect. Details are not described herein again.

In the first aspect to the fourth aspect, the spectrum resource information in this application may include one of the following (1), (2), and (3):
(1) the fact that the terminal device is to use a licensed spectrum resource;
(2) the fact that the terminal device is to use an unlicensed spectrum resource and the manner of using an unlicensed spectrum resource by the terminal device; and
(3) the fact that the terminal device is to alternately use a licensed spectrum resource and an unlicensed spectrum resource, the manner of using an unlicensed spectrum resource by the terminal device, a time that the terminal device is to spend in using a licensed spectrum resource every time, and a time that the terminal device is to spend in using an unlicensed spectrum resource every time.

In this application, because the spectrum resource information may include one of the foregoing (1), (2), and (3), and the manner of using an unlicensed spectrum resource by the terminal device may be the LBT manner or the low duty cycle manner, the access network device in this application may determine different spectrum resource information for different terminal devices in a coverage area of the access network device based on spectrum resource supporting capabilities of the terminal devices and service requirements of the terminal devices, so that the different terminal devices can properly use a licensed spectrum resource or an unlicensed spectrum resource based on allocation by the access network device. In addition, in application of an unlicensed spectrum resource, some terminal devices in a coverage area of a same access network device may contend for a frequency band in the unlicensed spectrum resource in the LBT manner, and other terminal devices may contend for a frequency band in the unlicensed spectrum resource in the low duty cycle manner. In this way, cases in which a plurality of terminal devices simultaneously obtain a same frequency band in the unlicensed spectrum resource through contention can be reduced or avoided, so that data transmission efficiency can be improved.

In the first aspect to the fourth aspect, in this application, the spectrum resource supporting capability of the terminal device may include the capability that the terminal device supports an unlicensed spectrum resource and the manner, supported by the terminal device, of using an unlicensed spectrum resource; or the spectrum resource supporting capability of the terminal device may include a capability that the terminal device supports a licensed spectrum resource, the capability that the terminal device supports an unlicensed spectrum resource, and the manner, supported by the terminal device, of using an unlicensed spectrum resource.

In this application, the spectrum resource supporting capability of the terminal device may include either of the foregoing two capabilities, and the manner, supported by the terminal device, of using an unlicensed spectrum resource may be the LBT manner and the low duty cycle manner. Therefore, in this application, regardless of whether the spectrum resource supporting capability of the terminal device is the first capability (to be specific, the capability that the terminal device supports an unlicensed spectrum resource and the manner, supported by the terminal device, of using an unlicensed spectrum resource) or the second capability (to be specific, the capability that the terminal device supports a licensed spectrum resource, the capability that the terminal device supports an unlicensed spectrum resource, and the manner, supported by the terminal device, of using an unlicensed spectrum resource), when determining the spectrum resource information for the terminal device, the access network device can determine, for the terminal device based on the service requirement of the terminal device, spectrum resource information that is more suitable for a service to be transmitted by the terminal device. In this way, it is ensured that the spectrum resource information determined by the access network device for the terminal device can meet the service requirement of the terminal device.

The spectrum resource supporting capability of the terminal device may further include the capability that the terminal device supports a licensed spectrum resource. When the access device learns that the terminal device supports only a licensed spectrum resource, the access network device may directly determine spectrum resource information for the terminal device. The spectrum resource information is specifically the fact that the terminal device is to use a licensed spectrum resource.

In the first aspect to the fourth aspect, the spectrum resource information in this application specifically includes the fact that the terminal device is to use a licensed spectrum resource. When a quantity of terminal devices using the licensed spectrum resource reaches a preset threshold, the spectrum resource indication message sent by the access network device to the terminal device is specifically used to instruct the terminal device to be handed over from a serving cell of the terminal device or reselect a serving cell of the terminal device.

In this application, when the spectrum resource information determined by the access network device for the terminal device is the fact that the terminal device is to use a licensed spectrum resource (namely, (1)), if the access network device determines that the quantity of terminal devices currently using the licensed spectrum resource reaches the preset threshold, the access network device may instruct the terminal device to be handed over from a serving cell of the terminal device or reselect a serving cell of the terminal device. In this way, after the terminal device is handed over from a serving cell of the terminal device or reselects a serving cell of the terminal device, an access network device serving the terminal device (after the terminal device is handed over from a serving cell of the terminal device or reselects a serving cell of the terminal device, the access network device serving the terminal device may be the access network device serving the terminal device before the terminal device is handed over from a serving cell of the terminal device or reselects a serving cell of the terminal device, or may be another access network device) may redetermine spectrum resource information for the terminal device.

In the first aspect to the fourth aspect, in this application, the spectrum resource information may be indicated by setting a field in the spectrum resource indication message.

According to a fifth aspect, an access network device is provided. The access network device includes a processor, a transceiver, and a memory. The memory is configured to store a computer executable instruction, and when the access network device runs, the processor executes the computer executable instruction stored in the memory, so that the access network device performs the spectrum resource indication method in the first aspect or any one of the possible implementations of the first aspect.

According to a sixth aspect, a computer readable storage medium is provided. The computer readable storage medium stores one or more programs, and the one or more programs include a computer executable instruction. When a processor in an access network device executes the computer executable instruction, the access network device performs the spectrum resource indication method in the first aspect or any one of the possible implementations of the first aspect.

For detailed description of technical effects of the fifth aspect and the sixth aspect, refer to related description of a technical effect of the first aspect or any one of the possible implementations of the first aspect. Details are not described herein again.

According to a seventh aspect, a terminal device is provided. The terminal device includes a processor, a transceiver, and a memory. The memory is configured to store a computer executable instruction, and when the terminal device runs, the processor executes the computer executable instruction stored in the memory, so that the terminal device performs the spectrum resource indication method in the second aspect or either of the possible implementations of the second aspect.

According to an eighth aspect, a computer readable storage medium is provided. The computer readable storage medium stores one or more programs, and the one or more programs include a computer executable instruction. When a processor in a terminal device executes the computer executable instruction, the terminal device performs the spectrum resource indication method in the second aspect or either of the possible implementations of the second aspect.

For detailed description of technical effects of the seventh aspect and the eighth aspect, refer to related description of a technical effect of the second aspect or either of the possible implementations of the second aspect. Details are not described herein again.

According to a ninth aspect, a wireless communications system is provided. The system includes the access network device in the third aspect or any one of the possible implementations of the third aspect or the access network device in the fifth aspect, and the terminal device in the fourth aspect or either of the possible implementations of the fourth aspect or the terminal device in the seventh aspect.

For detailed description of a technical effect of the ninth aspect, refer to related description of technical effects in the third aspect or any one of the possible implementations of the third aspect, the fifth aspect, the fourth aspect or either of the possible implementations of the fourth aspect, and the seventh aspect. Details are not described herein again.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention.
FIG. 1 is a schematic diagram of a system architecture of a wireless communications system according to an embodiment of the present invention;
FIG. 2 is a schematic structural diagram of a base station according to an embodiment of the present invention;
FIG. 3 is a schematic structural diagram of a mobile phone according to an embodiment of the present invention;
FIG. 4 is a schematic diagram 1 of a spectrum resource indication method according to an embodiment of the present invention;
FIG. 5 is a schematic diagram 2 of a spectrum resource indication method according to an embodiment of the present invention;
FIG. 6A and FIG. 6B are a schematic diagram 3 of a spectrum resource indication method according to an embodiment of the present invention;
FIG. 7 is a schematic structural diagram 1 of an access network device according to an embodiment of the present invention;
FIG. 8 is a schematic structural diagram 2 of an access network device according to an embodiment of the present invention;
FIG. 9 is a schematic structural diagram 1 of a terminal device according to an embodiment of the present invention; and
FIG. 10 is a schematic structural diagram 2 of a terminal device according to an embodiment of the present invention.

### DESCRIPTION OF EMBODIMENTS

The following describes the technical solutions in the embodiments of the present invention in detail with reference to the accompanying drawings in the embodiments of the present invention. Apparently, the described embodiments are merely some but not all of the embodiments of the present invention.

In addition, in the embodiments of the present invention, the word such as "example" or "for example" is used to represent giving an example, an illustration, or a description. Any embodiment or design scheme described as "example" or "for example" in the embodiments of the present invention should not be explained as being more preferred or having more advantages than another embodiment or design scheme. Exactly, use of the word such as "example" or "for example" is intended to present a related concept in a specific manner.

In the description of the present invention, unless otherwise stated, "plurality of' means two or more. For example, "a plurality of terminal devices" means two or more terminal devices.

Generally, in application of an unlicensed spectrum resource, because all terminal devices in a coverage area of a same access network device contend for a frequency band in the unlicensed spectrum resource only in an LBT manner or a low duty cycle manner, a plurality of terminal devices may simultaneously obtain a same frequency band in the unlicensed spectrum resource through contention, and the plurality of terminal devices may simultaneously send data in the frequency band. Consequently, data of some terminal devices may fail to be sent, and data transmission efficiency is reduced.

To resolve the foregoing problem, the embodiments of the present invention provide a spectrum resource indication method, an apparatus, and a system. Because an access network device may determine different spectrum resource information for different terminal devices in a coverage area of the access network device based on spectrum resource supporting capabilities of the terminal devices and service requirements of the terminal devices, in application of an unlicensed spectrum resource, some terminal devices in a coverage area of a same access network device may contend for a frequency band in the unlicensed spectrum resource in an LBT manner, and other terminal devices may contend for a frequency band in the unlicensed spectrum resource in a low duty cycle manner. In this way, cases in which a plurality of terminal devices simultaneously obtain a same frequency band in the unlicensed spectrum resource through contention can be reduced or avoided, so that data transmission efficiency can be improved.

It should be noted that in the spectrum resource indication method provided in the embodiments of the present invention, the access network device may separately determine spectrum resource information for a plurality of terminal devices in the coverage area of the access network device. To describe the technical solutions of the embodiments of the present invention more clearly, the embodiments of the present invention are described merely by using an example in which the access network device determines spectrum resource information for one terminal device in the coverage area of the access network device.

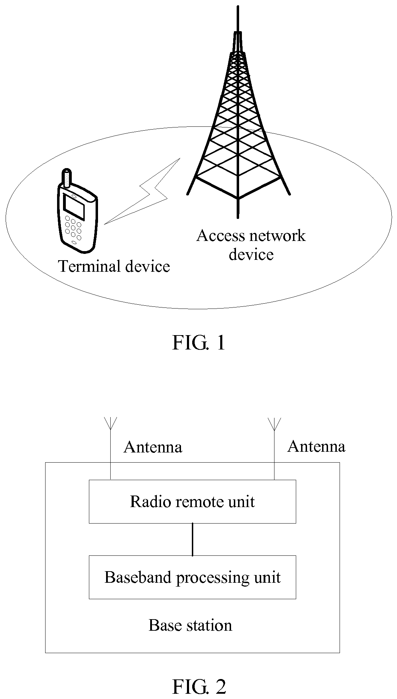

The spectrum resource indication method provided in the embodiments of the present invention may be applied to a wireless communications system, for example, a wireless communications system shown in FIG. 1. FIG. 1 is a schematic diagram of a system architecture of a wireless communications system according to an embodiment of the present invention. In FIG. 1, the wireless communications system includes a terminal device and an access network device. In actual application, a connection between the terminal device and the access network device may be a wireless connection.

The access network device in this embodiment of the present invention may be a base station, an evolved NodeB, or the like.

For example, in this embodiment of the present invention, the access network device shown in FIG. 1 may be a base station. Components of the base station in this embodiment of the present invention are described below in detail with reference to FIG. 2. As shown in FIG. 2, the base station may include a radio remote unit (radio remote unit, RRU), a baseband processing unit (building base band unit, BBU), and an antenna. The RRU may be connected to the BBU by using an optical fiber, and the RRU is further connected to the antenna by using a coaxial cable and a power splitter (or a coupler). One BBU may be usually connected to a plurality of RRUs.

The RRU may include four modules: a digital intermediate frequency module, a transceiver module, a power amplification module, and a filtering module. The digital intermediate frequency module is configured to perform modulation and demodulation, digital up- and down-frequency conversion, digital-to-analog conversion, and the like during optical transmission. The transceiver module converts an intermediate frequency signal into a radio frequency signal. After being amplified by the power amplification module and filtered by the filtering module, the radio frequency signal is transmitted by using the antenna.

The BBU is configured to implement a baseband processing function (for example, encoding, multiplexing, modulation, and spreading) of a Uu interface (to be specific, an interface between a terminal device and the base station); an interface function, signaling processing, and local and remote operation and maintenance functions of a logical interface between a radio network controller (radio network controller, RNC) and the base station; an operating status monitoring function and an alarm information reporting function of a base station system; and the like.

The terminal device in this embodiment of the present invention may be referred to as a terminal (terminal). The terminal device may be a mobile phone, user equipment (user equipment, UE), a mobile station (mobile station, MS), a mobile terminal (mobile terminal), a notebook computer, or the like. The terminal device may communicate with one or more core networks through a radio access network (radio access network, RAN). For example, the terminal device may be a mobile phone (or referred to as a "cellular" phone), a computer with a mobile terminal, or the like. For example, the terminal device may be a portable, pocket-sized, handheld, computer built-in, or in-vehicle mobile apparatus. The terminal devices exchange voice and/or data with the radio access network.

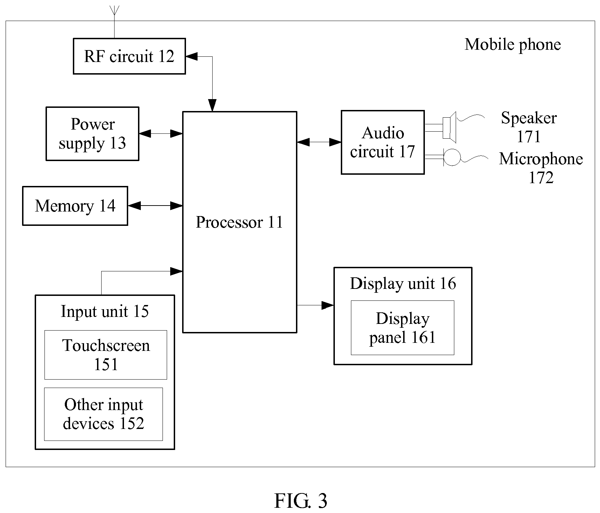

For example, in this embodiment of the present invention, the terminal device shown in FIG. 1 may be a mobile phone. Components of the mobile phone in this embodiment of the present invention are described below in detail with reference to FIG. 3. As shown in FIG. 3, the mobile phone may include components such as a processor 11, a radio frequency (radio frequency, RF) circuit 12, a power supply 13, a memory 14, an input unit 15, a display unit 16, and an audio circuit 17. A person skilled in the art may understand that a structure of the mobile phone shown in FIG. 3 does not constitute any limitation on the mobile phone, and the mobile phone may include more or fewer components than those shown in FIG. 3, or may include a combination of some of the components shown in FIG. 3, or may include components arranged differently from those shown in FIG. 3.

As a control center of the mobile phone, the processor 11 connects to all parts of the entire mobile phone by using various interfaces and lines. By running or executing a software program and/or a software module stored in the memory 14 and by invoking data stored in the memory 14, the processor 11 performs various functions of the mobile phone and processes data, thereby monitoring the entire mobile phone. Optionally, the processor 11 may include one or more processing units. Preferably, an application processor and a modem processor may be integrated into the processor 11. The application processor mainly processes an operating system, a user interface, an application program, and the like, and the modem processor mainly processes wireless communication. It may be understood that the modem processor may alternatively not be integrated into the processor 11.

The RF circuit 12 may be configured to receive and send information, or receive and send a signal in a call process. In particular, after receiving downlink information from a base station, the RF circuit 12 sends the downlink information to the processor 11 for processing. In addition, the RF circuit 12 sends uplink data to the base station. The RF circuit usually includes but is not limited to an antenna, at least one amplifier, a transceiver, a coupler, a low noise amplifier (low noise amplifier, LNA), a duplexer, and the like. In addition, the RF circuit 12 may further communicate with a network and other devices through wireless communication. The wireless communication may use any communication standard or protocol, including but not limited to Global System for Mobile Communications (Global System for Mobile Communications, GSM), a General Packet Radio Service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), e-mail, short message service (short message service, SMS), and the like.

The power supply 13 may be a battery. Optionally, the power supply 13 may be logically connected to the processor 11 by using a power supply management system, to implement functions such as charging management, discharging management, and power consumption management by using the power supply management system.

The memory 14 may be configured to store a software program and a software module. The processor 11 runs the software program and the software module that are stored in the memory 14, to execute various functional applications of the mobile phone and process data. The memory 14 may mainly include a program storage area and a data storage area. The program storage area may store an operating system, an application program (such as a sound play function or an image play function) required by at least one function, and the like. The data storage area may store data (such as audio data, image data, or a phonebook) created based on use of the mobile phone. In addition, the memory 14 may include a high-speed random access memory, or may include a non-volatile memory, for example, at least one magnetic disk storage device, a flash storage device, or other volatile solid-state storage devices.

The input device 15 may be configured to receive entered digital or character information and generate key signal input that is related to a user setting and function control of the mobile phone. Specifically, the input unit 15 may include a touchscreen 151 and other input devices 152. The touchscreen 151, also referred to as a touch panel, may collect a touch operation performed by a user on or near the touchscreen 151 (for example, an operation performed by the user on the touchscreen 151 or near the touchscreen 151 by using any appropriate object such as a finger or a stylus), and drive a corresponding connected apparatus according to a preset program. Optionally, the touchscreen 151 may include two parts: a touch detection apparatus and a touch controller. The touch detection apparatus detects a touch direction of the user, detects a signal brought by a touch operation, and transmits the signal to the touch controller. The touch controller receives touch information from the touch detection apparatus, converts the touch information into touch coordinates, and sends the touch coordinates to the processor 11. In addition, the touch controller can receive and execute a command sent by the processor 11. In addition, the touchscreen 151 may be implemented in a plurality of types, for example, a resistive type, a capacitive type, an infrared ray type, and a surface acoustic wave type. The other input devices 152 may include but are not limited to one or more of a physical keyboard, a functional button (such as a volume control button or a power button), a trackball, a mouse, a joystick, and the like.

The display unit 16 may be configured to display information entered by the user or information provided for the user, and various menus of the mobile phone. The display unit 16 may include a display panel 161. Optionally, the display panel 161 may be configured in a form of a liquid crystal display (liquid crystal display, LCD), an organic light-emitting diode (organic light-emitting diode, OLED), or the like. Further, the touchscreen 151 may cover the display panel 161. After detecting a touch operation performed on or near the touchscreen 151, the touchscreen 151 sends the touch operation to the processor 11 to determine a type of a touch event, and then the processor 11 provides corresponding visual output on the display panel 161 based on the type of the touch event. Although the touchscreen 151 and the display panel 161 serve as two independent components in FIG. 3 to implement input and output functions of the mobile phone, in some embodiments, the touchscreen 151 and the display panel 161 may be integrated to implement the input and output functions of the mobile phone.

The audio circuit 17, a speaker 171, and a microphone 172 are configured to provide an audio interface between the user and the mobile phone. The audio circuit 17 may convert received audio data into an electrical signal and transmit the electrical signal to the speaker 171, and the speaker 171 converts the electrical signal into a sound signal for output. In addition, the microphone 172 converts a collected sound signal into an electrical signal, and the audio circuit 17 receives the electrical signal, converts the electrical signal into audio data, and then outputs the audio data to the RF circuit 12, to send the audio data to, for example, another mobile phone, or outputs the audio data to the memory 14 for further processing.

Optionally, the mobile phone may further include various sensors, for example, a gyroscope sensor, a barometer sensor, an infrared sensor, and a magnetometer sensor. Details are not described herein.

Optionally, the mobile phone may further include a Wireless Fidelity (Wireless Fidelity, Wi-Fi) module, a Bluetooth module, and the like. Details are not described herein.

The spectrum resource indication method provided in the embodiments of the present invention is described below by using an example.

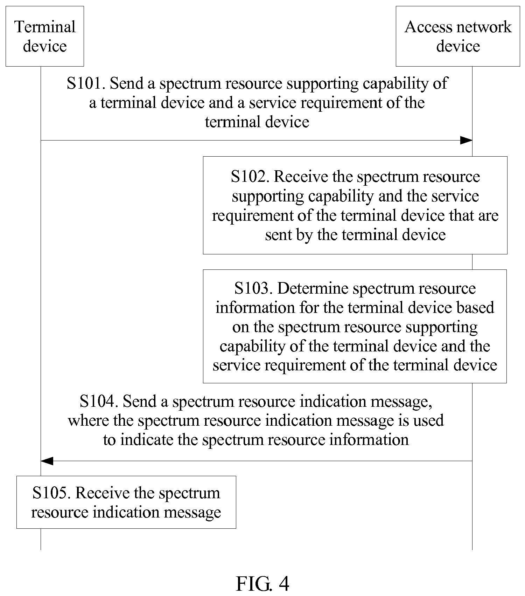

As shown in FIG. 4, an embodiment of the present invention provides a spectrum resource indication method. The method may include the following steps.

S101. A terminal device sends a spectrum resource supporting capability of the terminal device and a service requirement of the terminal device to an access network device.

The spectrum resource supporting capability of the terminal device and the service requirement of the terminal device are used by the access network device to determine spectrum resource information for the terminal device.

In this embodiment of the present invention, after the terminal device enters a coverage area of the access network device, the terminal device may request a spectrum resource from the access network device. In this case, the terminal device may send the spectrum resource supporting capability of the terminal device and the service requirement of the terminal device to the access network device, so that the access network device can determine the spectrum resource information for the terminal device based on the spectrum resource supporting capability of the terminal device and the service requirement of the terminal device.

Optionally, in this embodiment of the present invention, the terminal device may specifically send the spectrum resource supporting capability of the terminal device and the service requirement of the terminal device to the access network device by using a request message. The request message may be a message usually used for interaction between the terminal device and the access network device, or may be an interaction message newly added between the terminal device and the access network device.

Optionally, the spectrum resource supporting capability of the terminal device may include a capability that the terminal device supports an unlicensed spectrum resource and a manner, supported by the terminal device, of using an unlicensed spectrum resource, or a capability that the terminal device supports a licensed spectrum resource, a capability that the terminal device supports an unlicensed spectrum resource, and a manner, supported by the terminal device, of using an unlicensed spectrum resource.

Optionally, the manner, supported by the terminal device, of using an unlicensed spectrum resource may include an LBT manner and a low duty cycle manner.

Specifically, the spectrum resource supporting capability of the terminal device may include the following two cases:

Case 1: The terminal device supports an unlicensed spectrum resource and the manner, supported by the terminal device, of using an unlicensed spectrum resource is the LBT manner and the low duty cycle manner.

Case 2: The terminal device supports a licensed spectrum resource and an unlicensed spectrum resource and the manner, supported by the terminal device, of using an unlicensed spectrum resource is the LBT manner and the low duty cycle manner.

In this embodiment of the present invention, regardless of whether the spectrum resource supporting capability of the terminal device is Case 1 or Case 2, when determining the spectrum resource information for the terminal device, the access network device can determine, for the terminal device based on the service requirement of the terminal device, spectrum resource information that is more suitable for a service to be transmitted by the terminal device. In this way, it is ensured that the spectrum resource information determined by the access network device for the terminal device can meet the service requirement of the terminal device.

Optionally, the spectrum resource supporting capability of the terminal device may further include the capability that the terminal device supports a licensed spectrum resource. When the access device learns that the terminal device supports only a licensed spectrum resource, the access network device may directly determine spectrum resource information for the terminal device. The spectrum resource information is specifically a fact that the terminal device is to use a licensed spectrum resource.

Optionally, the service requirement of the terminal device may be a service requirement of a service historically transmitted by the terminal device. The service requirement of the service historically transmitted by the terminal device includes at least one of a transmission delay requirement of the service historically transmitted by the terminal device, a priority of the service historically transmitted by the terminal device, and a packet loss rate requirement of the service historically transmitted by the terminal device.

S102. The access network device receives the spectrum resource supporting capability and the service requirement of the terminal device that are sent by the terminal device.

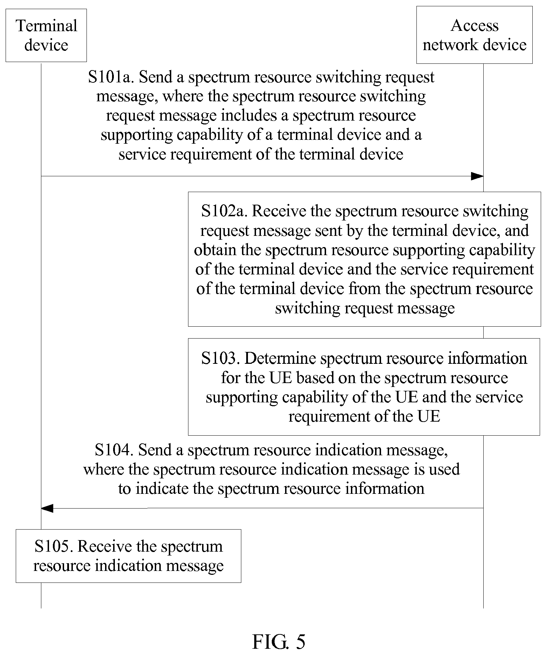

Optionally, in this embodiment of the present invention, when signal transmission quality of a frequency band (for example, a frequency band in a licensed spectrum resource or a frequency band in an unlicensed spectrum resource) currently used by the terminal device is relatively poor (for example, the signal transmission quality of the frequency band currently used by the terminal device is less than or equal to a preset threshold), the terminal device may send a spectrum resource switching request message to the access network device to request the access network device to redetermine spectrum resource information for the terminal device. In other words, as shown in FIG. 5, S101 and S102 in FIG. 4 may be specifically replaced with SlOla and S102a.

S101a. The terminal device sends a spectrum resource switching request message to the access network device, where the spectrum resource switching request message includes the spectrum resource supporting capability of the terminal device and the service requirement of the terminal device.

S102a. The access network device receives the spectrum resource switching request message sent by the terminal device, and obtains the spectrum resource supporting capability of the terminal device and the service requirement of the terminal device from the spectrum resource switching request message.

In this embodiment of the present invention, when signal transmission quality of a frequency band (for example, a frequency band in a licensed spectrum resource or a frequency band in an unlicensed spectrum resource) currently used by the terminal device is relatively poor (for example, the signal transmission quality of the frequency band currently used by the terminal device is less than or equal to a preset threshold), the terminal device may send the spectrum resource switching request message to the access network device to request the access network device to redetermine spectrum resource information for the terminal device. Therefore, after receiving the spectrum resource switching request, the access network device may allocate spectrum resource information to the terminal device based on the spectrum resource supporting capability of the terminal device and the service requirement of the terminal device. In this way, when the signal transmission quality of the frequency band currently used by the terminal device is relatively poor, new spectrum resource information can be redetermined for the terminal device in a timely manner, so that data transmission efficiency of the terminal device is ensured.

S103. The access network device determines spectrum resource information for the terminal device based on the spectrum resource supporting capability of the terminal device and the service requirement of the terminal device.

The spectrum resource information may include one of the following (1), (2), and (3):
(1) a fact that the terminal device is to use a licensed spectrum resource;
(2) a fact that the terminal device is to use an unlicensed spectrum resource and a manner of using an unlicensed spectrum resource by the terminal device; and
(3) a fact that the terminal device is to alternately use a licensed spectrum resource and an unlicensed spectrum resource, a manner of using an unlicensed spectrum resource by the terminal device, a time that the terminal device is to spend in using a licensed spectrum resource every time, and a time that the terminal device is to spend in using an unlicensed spectrum resource every time.

Because the spectrum resource information in this embodiment of the present invention may include the foregoing (1), (2), or (3), and the manner of using an unlicensed spectrum resource by the terminal device includes the LBT manner or the low duty cycle manner, the access network device in this application may determine different spectrum resource information for different terminal devices in the coverage area of the access network device based on spectrum resource supporting capabilities of the terminal devices and service requirements of the terminal devices, so that the different terminal devices can properly use a licensed spectrum resource or an unlicensed spectrum resource based on allocation by the access network device. In addition, in application of an unlicensed spectrum resource, some terminal devices in a coverage area of a same access network device may contend for a frequency band in the unlicensed spectrum resource in the LBT manner, and other terminal devices may contend for a frequency band in the unlicensed spectrum resource in the low duty cycle manner. In this way, cases in which a plurality of terminal devices simultaneously obtain a same frequency band in the unlicensed spectrum resource through contention can be reduced or avoided, so that data transmission efficiency can be improved.

Optionally, when the spectrum resource information determined by the access network device for the terminal device is the foregoing (1) or (3), the access network device may further allocate a first frequency band in the licensed spectrum resource to the terminal device. The first frequency band may be any one of available frequency bands in the licensed spectrum resource.

It should be noted that the available frequency band in the licensed spectrum resource in this embodiment of the present invention is a frequency band that is not occupied by other terminal devices in the licensed spectrum resource.

Optionally, the manner of using an unlicensed spectrum resource by the terminal device may be the LBT manner or the low duty cycle manner.

Optionally, in this embodiment of the present invention, the access network device may determine the spectrum resource information for the terminal device based on the spectrum resource supporting capability of the terminal device and the service requirement of the terminal device. Specifically, when the spectrum resource supporting capability of the terminal device is Case 1 (to be specific, the terminal device supports an unlicensed spectrum resource and the manner, supported by the terminal device, of using an unlicensed spectrum resource is the LBT manner and the low duty cycle manner), the spectrum resource information determined by the access network device for the terminal device may be the foregoing (2). When the spectrum resource supporting capability of the terminal device is Case 2 (to be specific, the terminal device supports a licensed spectrum resource and an unlicensed spectrum resource and the manner, supported by the terminal device, of using an unlicensed spectrum resource is the LBT manner and the low duty cycle manner), the spectrum resource information determined by the access network device for the terminal device may be any one of the foregoing (1), (2), and (3).

The spectrum resource information determined by the access network device for the terminal device when the spectrum resource supporting capability of the terminal device is Case 1 and the spectrum resource information determined by the access network device for the terminal device when the spectrum resource supporting capability of the terminal device is Case 2 are separately described below in detail.
(I). The spectrum resource supporting capability of the terminal device is Case 1.

In this embodiment of the present invention, when the spectrum resource supporting capability of the terminal device is Case 1, the spectrum resource information determined by the access network device for the terminal device may be the foregoing (2).

When the spectrum resource supporting capability of the terminal device is Case 1, the access network device may learn, based on the spectrum resource supporting capability of the terminal device, that the terminal device supports an unlicensed spectrum resource, and the manner, supported by the terminal device, of using an unlicensed spectrum resource is the LBT manner and the low duty cycle manner. Therefore, the access network device may determine that the terminal device is to use an unlicensed spectrum resource, and the access network device may determine, based on the transmission delay requirement of the service historically transmitted by the terminal device, that the manner of using an unlicensed spectrum resource by the terminal device is the LBT manner or the low duty cycle manner.

In this embodiment of the present invention, a method for determining, by the access network device based on the transmission delay requirement of the service historically transmitted by the terminal device, that the manner of using an unlicensed spectrum resource by the terminal device is the LBT manner or the low duty cycle manner may specifically include:
when the transmission delay requirement of the service historically transmitted by the terminal device is relatively low (for example, a transmission delay is greater than or equal to a preset delay threshold), the access network device may determine that the manner of using an unlicensed spectrum resource by the terminal device is the LBT manner; or when the transmission delay requirement of the service historically transmitted by the terminal device is relatively high (for example, is less than a preset delay threshold), the access network device may determine that the manner of using an unlicensed spectrum resource by the terminal device is the low duty cycle manner.

(II). The spectrum resource supporting capability of the terminal device is Case 2.

In this embodiment of the present invention, when the spectrum resource supporting capability of the terminal device is Case 2, the spectrum resource information determined by the access network device for the terminal device may be three types of content, namely, the foregoing (1), (2), or (3). The three types of content are separately described below in detail.
1. When the spectrum resource supporting capability of the terminal device is Case 2, the spectrum resource information determined by the access network device for the terminal device is the foregoing (1).
   When the spectrum resource supporting capability of the terminal device is Case 2, the access network device may learn, based on the spectrum resource supporting capability of the terminal device, that the terminal device supports a licensed spectrum resource and an unlicensed spectrum resource, and the manner, supported by the terminal device, of using an unlicensed spectrum resource includes the LBT manner and the low duty cycle manner. In this case, the access network device may determine, based on the priority of the service historically transmitted by the terminal device, that the terminal device is to use a licensed spectrum resource, or the terminal device is to use an unlicensed spectrum resource, or the terminal device is to alternately use a licensed spectrum resource and an unlicensed spectrum resource. Specifically, when the priority of the service historically transmitted by the terminal device is greater than a preset priority, the access network device may determine that the terminal device is to use a licensed spectrum resource.
2. When the spectrum resource supporting capability of the terminal device is Case 2, the spectrum resource information determined by the access network device for the terminal device is the foregoing (2).
   When the spectrum resource supporting capability of the terminal device is Case 2, the access network device may determine, based on the spectrum resource supporting capability of the terminal device, that the terminal device supports a licensed spectrum resource and an unlicensed spectrum resource, and the manner, supported by the terminal device, of using an unlicensed spectrum resource includes the LBT manner and the low duty cycle manner. In this case, the access network device may determine, based on the priority of the service historically transmitted by the terminal device, that the terminal device is to use a licensed spectrum resource, or the terminal device is to use an unlicensed spectrum resource, or the terminal device is to alternately use a licensed spectrum resource and an unlicensed spectrum resource. Specifically, when the priority of the service historically transmitted by the terminal device is less than or equal to a preset priority, the access network device may determine that the terminal device is to use an unlicensed spectrum resource, and the access network device may determine, based on the transmission delay requirement of the service historically transmitted by the terminal device, that the manner of using an unlicensed spectrum resource by the terminal device is the LBT manner or the low duty cycle manner.
   It should be noted that a method, in the foregoing 2, for determining, by the access network device based on the transmission delay requirement of the service historically transmitted by the terminal device, that the manner of using an unlicensed spectrum resource by the terminal device is the LBT manner or the low duty cycle manner is the same as the method, in the foregoing (I), for determining, by the access network device based on the transmission delay requirement of the service historically transmitted by the terminal device, that the manner of using an unlicensed spectrum resource by the terminal device is the LBT manner or the low duty cycle manner. For details, refer to related description in the foregoing (I). Details are not described herein again.
3. When the spectrum resource supporting capability of the terminal device is Case 2, the spectrum resource information determined by the access network device for the terminal device is the foregoing (3).

When the spectrum resource supporting capability of the terminal device is Case 2, the access network device may learn, based on the spectrum resource supporting capability of the terminal device, that the terminal device supports a licensed spectrum resource and an unlicensed spectrum resource, and the manner, supported by the terminal device, of using an unlicensed spectrum resource includes the LBT manner and the low duty cycle manner. In this case, the access network device may determine, based on the priority of the service historically transmitted by the terminal device, that the terminal device is to use a licensed spectrum resource, or the terminal device is to use an unlicensed spectrum resource, or the terminal device is to alternately use a licensed spectrum resource and an unlicensed spectrum resource. Specifically, when the priority of the service historically transmitted by the terminal device is greater than a preset priority, and the licensed spectrum resource cannot be continuously used by the terminal device, the terminal device may determine that the terminal device is to alternately use a licensed spectrum resource and an unlicensed spectrum resource. In addition, the access network device may further determine, based on the transmission delay requirement of the service historically transmitted by the terminal device, that the manner of using an unlicensed spectrum resource by the terminal device is the LBT manner or the low duty cycle manner.

Optionally, in this embodiment of the present invention, a method for determining, by the access network device, the time that the terminal device is to spend in using a licensed spectrum resource every time and the time that the terminal device is to spend in using an unlicensed spectrum resource every time may specifically include the following method.

Optionally, the access network device may determine, based on the packet loss rate requirement of the service historically transmitted by the terminal device, the time that the terminal device is to spend in using a licensed spectrum resource every time and the time that the terminal device is to spend in using an unlicensed spectrum resource every time. When the packet loss rate requirement of the service historically transmitted by the terminal device is relatively high (for example, a packet loss rate is required to be less than a first packet loss rate threshold), the time that the terminal device is to spend in using a licensed spectrum resource every time may be set to be longer, and the time that the terminal device is to spend in using an unlicensed spectrum resource every time may be set to be shorter. In other words, the time that the terminal device is to spend in using a licensed spectrum resource every time is greater than the time that the terminal device is to spend in using an unlicensed spectrum resource every time. When the packet loss rate requirement of the service historically transmitted by the terminal device is relatively low (for example, a packet loss rate is required to be less than a second packet loss rate threshold, and the second packet loss rate threshold is greater than the first packet loss rate threshold), the time that the terminal device is to spend in using a licensed spectrum resource every time may be set to be shorter, and the time that the terminal device is to spend in using an unlicensed spectrum resource every time may be set to be longer. In other words, the time that the terminal device is to spend in using an unlicensed spectrum resource every time is greater than the time that the terminal device is to spend in using a licensed spectrum resource every time.

It should be noted that a method, in the foregoing 3, for determining, by the access network device based on the transmission delay requirement of the service historically transmitted by the terminal device, that the manner of using an unlicensed spectrum resource by the terminal device is the LBT manner or the low duty cycle manner is the same as the method, in the foregoing (I), for determining, by the access network device based on the transmission delay requirement of the service historically transmitted by the terminal device, that the manner of using an unlicensed spectrum resource by the terminal device is the LBT manner or the low duty cycle manner. For details, refer to related description in the foregoing (I). Details are not described herein again.

Further, when spectrum resource information determined by the access network device for a plurality of terminal devices in the coverage area of the access network device is all the foregoing (3), the access network device may stagger times when the plurality of terminal devices use a same spectrum resource. For example, when spectrum resource information separately determined by the access network device for a terminal device 1 and a terminal device 2 in the coverage area is all the foregoing (3), the access network device may stagger (for example, may partially stagger or fully stagger) a time when the terminal device 1 uses a licensed spectrum resource and a time when the terminal device 2 uses a licensed spectrum resource, to reduce or avoid cases in which the terminal device 1 and the terminal device 2 simultaneously use the licensed spectrum resource, thereby alleviating a shortage of licensed spectrum resources. In addition, the access network device may stagger (for example, may partially stagger or fully stagger) a time when the terminal device 2 uses an unlicensed spectrum resource and a time when the terminal device 2 uses an unlicensed spectrum resource, to reduce or avoid cases in which the terminal device 1 and the terminal device 2 simultaneously obtain a same frequency band in the unlicensed spectrum resource through contention, thereby improving data transmission efficiency.

S104. The access network device sends a spectrum resource indication message to the terminal device, where the spectrum resource indication message is used to indicate the spectrum resource information.

Optionally, after the access network device determines the spectrum resource information for the terminal device based on the spectrum resource supporting capability of the terminal device and the service requirement of the service historically transmitted by the terminal device, the access network device may indicate the spectrum resource information to the terminal device by sending the spectrum resource indication message to the terminal device.

Optionally, in this embodiment of the present invention, when the spectrum resource information determined by the access network device for the terminal device is the fact that the terminal device is to use a licensed spectrum resource (namely, the foregoing (1)), if the access network device determines that a quantity of terminal devices currently using the licensed spectrum resource reaches a preset threshold, the spectrum resource indication message sent by the access network device to the terminal device is specifically used to instruct the terminal device to be handed over from a serving cell of the terminal device or reselect a serving cell of the terminal device.

Optionally, when the spectrum resource indication message is specifically used to instruct the terminal device to be handed over from a serving cell of the terminal device or reselect a serving cell of the terminal device, after the terminal device receives the spectrum resource indication message, the terminal device may be handed over from a serving cell of the terminal device or reselect a serving cell of the terminal device. In this way, after the terminal device is handed over from a serving cell or reselects a serving cell, an access network device serving the terminal device (after the terminal device is handed over from a serving cell of the terminal device or reselects a serving cell of the terminal device, the access network device serving the terminal device may be the access network device serving the terminal device before the terminal device is handed over from a serving cell of the terminal device or reselects a serving cell of the terminal device, or may be another access network device) may redetermine spectrum resource information for the terminal device.

It should be noted that after the terminal device is handed over from a serving cell of the terminal device or reselects a serving cell of the terminal device, the serving cell of the terminal device may have two possibilities. One possibility is that the serving cell of the terminal device is still a cell in the coverage area of the access network device before the terminal device is handed over from a serving cell of the terminal device or reselects a serving cell of the terminal device, and in this case, the access network device serving the terminal device is still the access network device serving the terminal device before the terminal device is handed over from a serving cell of the terminal device or reselects a serving cell of the terminal device. The other possibility is that the serving cell of the terminal device is not a cell in the coverage area of the access network device before the terminal device is handed over from a serving cell of the terminal device or reselects a serving cell of the terminal device, and in this case, the access network device serving the terminal device is an access network device serving the terminal device after the terminal device is handed over from a serving cell of the terminal device or reselects a serving cell of the terminal device.

Optionally, the spectrum resource information may be indicated by setting a field (specifically, different values may be set for the field) in the spectrum resource indication message.

In this embodiment of the present invention, the indicating the spectrum resource information by setting a field in the spectrum resource indication message is described by using an example based on the foregoing spectrum resource information, namely, the foregoing (1), (2), and (3).

In this embodiment of the present invention, because the manner of using an unlicensed spectrum resource by the terminal device may be the LBT manner or the low duty cycle manner, the spectrum resource information (2) may include (21) and (22), and the spectrum resource information (3) may include (31) and (32):
(21) the fact that the terminal device is to use an unlicensed spectrum resource and the manner of using an unlicensed spectrum resource by the terminal device, namely, the LBT manner;
(22) the fact that the terminal device is to use an unlicensed spectrum resource and the manner of using an unlicensed spectrum resource by the terminal device, namely, the low duty cycle manner;
(31) the fact that the terminal device is to alternately use a licensed spectrum resource and an unlicensed spectrum resource, the manner of using an unlicensed spectrum resource by the terminal device, namely, the LBT manner, the time that the terminal device is to spend in using a licensed spectrum resource every time, and the time that the terminal device is to spend in using an unlicensed spectrum resource every time; and
(32) the fact that the terminal device is to alternately use a licensed spectrum resource and an unlicensed spectrum resource, the manner of using an unlicensed spectrum resource by the terminal device, namely, the low duty cycle manner, the time that the terminal device is to spend in using a licensed spectrum resource every time, and the time that the terminal device is to spend in using an unlicensed spectrum resource every time.

In this embodiment of the present invention, when the access network device instructs the terminal device to alternately use a licensed spectrum resource and an unlicensed spectrum resource, the access network device may instruct the terminal device to use a licensed spectrum resource before using an unlicensed spectrum resource when the terminal device alternately uses a licensed spectrum resource and an unlicensed spectrum resource, or may instruct the terminal device to use an unlicensed spectrum resource before using a licensed spectrum resource when the terminal device alternately uses a licensed spectrum resource and an unlicensed spectrum resource. Therefore, the foregoing (31) may specifically include (311) and (312), and the foregoing (32) may specifically include (321) and (322):
(311) the fact that the terminal device is to alternately use a licensed spectrum resource and an unlicensed spectrum resource (specifically, use a licensed spectrum resource before using an unlicensed spectrum resource), the manner of using an unlicensed spectrum resource by the terminal device, namely, the LBT manner, the time that the terminal device is to spend in using a licensed spectrum resource every time, and the time that the terminal device is to spend in using an unlicensed spectrum resource every time;
(312) the fact that the terminal device is to alternately use a licensed spectrum resource and an unlicensed spectrum resource (specifically, use an unlicensed spectrum resource before using a licensed spectrum resource), the manner of using an unlicensed spectrum resource by the terminal device, namely, the LBT manner, the time that the terminal device is to spend in using a licensed spectrum resource every time, and the time that the terminal device is to spend in using an unlicensed spectrum resource every time;
(321) the fact that the terminal device is to alternately use a licensed spectrum resource and an unlicensed spectrum resource (specifically, use a licensed spectrum resource before using an unlicensed spectrum resource), the manner of using an unlicensed spectrum resource by the terminal device, namely, the low duty cycle manner, the time that the terminal device is to spend in using a licensed spectrum resource every time, and the time that the terminal device is to spend in using an unlicensed spectrum resource every time; and
(322) the fact that the terminal device is to alternately use a licensed spectrum resource and an unlicensed spectrum resource (specifically, use an unlicensed spectrum resource before using a licensed spectrum resource), the manner of using an unlicensed spectrum resource by the terminal device, namely, the low duty cycle manner, the time that the terminal device is to spend in using a licensed spectrum resource every time, and the time that the terminal device is to spend in using an unlicensed spectrum resource every time.

For the spectrum resource information (1), (21), (22), (311), (312), (321), and (322), different fields may be set in the spectrum resource indication message to indicate different content in (1), (21), (22), (311), (312), (321), and (322). For example, a field 1 may be set to indicate that the terminal device is to use a licensed spectrum resource, namely, the foregoing (1); or indicate that the terminal device is to use an unlicensed spectrum resource and the manner of using an unlicensed spectrum resource by the terminal device is the LBT manner, namely, the foregoing (21); or indicate that the terminal device is to use an unlicensed spectrum resource and the manner of using an unlicensed spectrum resource by the terminal device is the low duty cycle manner, namely, the foregoing (22); or indicate, in the foregoing (311), that the terminal device is to alternately use a licensed spectrum resource and an unlicensed spectrum resource (specifically, use a licensed spectrum resource before using an unlicensed spectrum resource), and the manner of using an unlicensed spectrum resource by the terminal device is the LBT manner; or indicate, in the foregoing (312), that the terminal device is to alternately use a licensed spectrum resource and an unlicensed spectrum resource (specifically, use an unlicensed spectrum resource before using a licensed spectrum resource), and the manner of using an unlicensed spectrum resource by the terminal device is the LBT manner; or indicate, in the foregoing (321), that the terminal device is to alternately use a licensed spectrum resource and an unlicensed spectrum resource (specifically, use a licensed spectrum resource before using an unlicensed spectrum resource), and the manner of using an unlicensed spectrum resource by the terminal device is the low duty cycle manner; or indicate, in the foregoing (322), that the terminal device is to alternately use a licensed spectrum resource and an unlicensed spectrum resource (specifically, use an unlicensed spectrum resource before using a licensed spectrum resource), and the manner of using an unlicensed spectrum resource by the terminal device is the low duty cycle manner.

For the foregoing (311), (312), (321), and (322), a field 2 and a field 3 may be set to indicate the time that the terminal device is to spend in using a licensed spectrum resource every time and the time that the terminal device is to spend in using an unlicensed spectrum resource every time.

For example, the field 2 may be set to indicate the time that the terminal device is to spend in using a licensed spectrum resource every time in (311), (312), (321), and (322), and the field 3 may be set to indicate the time that the terminal device is to spend in using an unlicensed spectrum resource every time in (311), (312), (321), and (322). Alternatively, the field 2 may be set to indicate the time that the terminal device is to spend in using an unlicensed spectrum resource every time in (311), (312), (321), and (322), and the field 3 may be set to indicate the time that the terminal device is to spend in using a licensed spectrum resource every time in (311), (312), (321), and (322). Specifically, the fields may be set based on an actual use requirement. This is not limited in this embodiment of the present invention.

Optionally, in this embodiment of the present invention, alternatively, a manner of setting the field 2 and the field 3 to indicate the time that the terminal device is to spend in using a licensed spectrum resource every time and the time that the terminal device is to spend in using an unlicensed spectrum resource every time may be as follows: setting the field 2 (or the field 3) to indicate a length of one cycle of alternately using a licensed spectrum resource and an unlicensed spectrum resource by the terminal device, and setting the field 3 (or the field 2) to indicate the time that the terminal device is to spend in using a licensed spectrum resource every time or the time that the terminal device is to spend in using an unlicensed spectrum resource every time. In this way, the field 2 and the field 3 may be used to indicate the time that the terminal device is to spend in using a licensed spectrum resource every time and the time that the terminal device is to spend in using an unlicensed spectrum resource every time.

Optionally, when the spectrum resource information determined by the access network device for the terminal device is the foregoing (1), (311), (312), (321), or (322), a first frequency band in a licensed spectrum resource may be allocated to the terminal device. Therefore, a field 4 may be set in the spectrum resource indication message to indicate the first frequency band in the licensed spectrum resource. The first frequency band may be any one of available frequency bands in the licensed spectrum resource.

It may be understood that quantities of bits in the field 1, the field 2, the field 3, and the field 4 are not limited in this embodiment of the present invention. In other words, the quantities of bits in the field 1, the field 2, the field 3, and the field 4 may be set based on an actual use requirement.

Manners of setting the field 1, the field 2, the field 3, and the field 4 and content indicated by the field 1, the field 2, the field 3, and the field 4 are separately described below by using examples.

### Field 1:

For example, assuming that the field 1 is set to 3 bits, Table 1 shows a possible implementation in which the field 1 in the spectrum resource indication message is set to indicate different content in (1), (21), (22), (311), (312), (321), and (322).

**Table 1**

| Field 1 | |
|---|---|
| Bit values | Indicated content |
| 000 | The terminal device is to use a licensed spectrum resource. |
| 001 | The terminal device is to use an unlicensed spectrum resource and the manner of using an unlicensed spectrum resource by the terminal device is the LBT manner. |
| 010 | The terminal device is to use an unlicensed spectrum resource and the manner of using an unlicensed spectrum resource by the terminal device is the low duty cycle manner. |
| 011 | The terminal device is to alternately use a licensed spectrum resource and an unlicensed spectrum resource (specifically, use a licensed spectrum resource before using an unlicensed spectrum resource), and the manner of using an unlicensed spectrum resource by the terminal device is the LBT manner. |
| 100 | The terminal device is to alternately use a licensed spectrum resource and an unlicensed spectrum resource (specifically, use a licensed spectrum resource before using an unlicensed spectrum resource), and the manner of using an unlicensed spectrum resource by the terminal device is the low duty cycle manner. |
| 101 | The terminal device is to alternately use a licensed spectrum resource and an unlicensed spectrum resource (specifically, use an unlicensed spectrum resource before using a licensed spectrum resource), and the manner of using an unlicensed spectrum resource by the terminal device is the LBT manner. |
| 110 | The terminal device is to alternately use a licensed spectrum resource and an unlicensed spectrum resource (specifically, use an unlicensed spectrum resource before using a licensed spectrum resource), and the manner of using an unlicensed spectrum resource by the terminal device is the low duty cycle manner. |

### Field 2 and field 3:

For example, the field 2 is used to indicate the time that the terminal device is to spend in using a licensed spectrum resource every time. Assuming that the time that the terminal device is to spend in using a licensed spectrum resource every time may be two radio frames long and three radio frames long, the field 2 may be set to 1 bit to indicate a specific length of the time that the terminal device is to spend in using a licensed spectrum resource every time. For example, a value of the 1 bit in the field 2 may be set to 0 to indicate that the time that the terminal device is to spend in using a licensed spectrum resource every time is two radio frames long, and a value of the 1 bit in the field 2 may be set to 1 to indicate that the time that the terminal device is to spend in using a licensed spectrum resource every time is three radio frames long.

After the field 2 is used to indicate the time that the terminal device is to spend in using a licensed spectrum resource every time, the field 3 may be used to indicate the time that the terminal device is to spend in using an unlicensed spectrum resource every time. Specifically, a method for using the field 3 to indicate the time that the terminal device is to spend in using an unlicensed spectrum resource every time is similar to the foregoing method for using the field 2 to indicate the time that the terminal device is to spend in using a licensed spectrum resource every time. For a specific method for using the field 3 to indicate the time that the terminal device is to spend in using an unlicensed spectrum resource every time, refer to the foregoing method for using the field 2 to indicate the time that the terminal device is to spend in using a licensed spectrum resource every time. Details are not described herein again.

Optionally, in this embodiment of the present invention, alternatively, a manner of setting the field 2 and the field 3 to indicate the time that the terminal device is to spend in using a licensed spectrum resource every time and the time that the terminal device is to spend in using an unlicensed spectrum resource every time may be as follows: setting the field 2 (or the field 3) to indicate the length of one cycle of alternately using a licensed spectrum resource and an unlicensed spectrum resource by the terminal device, and setting the field 3 (or the field 2) to indicate the time that the terminal device is to spend in using a licensed spectrum resource every time or the time that the terminal device is to spend in using an unlicensed spectrum resource every time. Example description is provided below by using an example in which the field 2 is set to indicate the length of one cycle of alternately using a licensed spectrum resource and an unlicensed spectrum resource by the terminal device and the field 3 is set to indicate the time that the terminal device is to spend in using a licensed spectrum resource every time.

### Field 2 and field 3:

In this embodiment of the present invention, the length of one cycle of alternately using a licensed spectrum resource and an unlicensed spectrum resource by the terminal device may be set by the access network device. For example, if the one cycle may be two radio frames long and three radio frames long, the field 2 may be set to indicate a specific length of the one cycle. For example, if the one cycle may be two radio frames long and three radio frames long, the field 2 may be set to 1 bit to indicate the length of the one cycle. For example, a value of the 1 bit in the field 2 may be set to 0 to indicate that the one cycle is two radio frames long, and a value of the 1 bit in the field 2 may be set to 1 to indicate that the one cycle is three radio frames long.

In this embodiment of the present invention, because the field 2 has been used to indicate the length of the one cycle, the field 3 may be used to indicate the time that the terminal device is to spend in using a licensed spectrum resource every time or the time that the terminal device is to spend in using an unlicensed spectrum resource every time. For example, if the field 3 is used to indicate the time that the terminal device is to spend in using a licensed spectrum resource every time, assuming that the time that the terminal device is to spend in using a licensed spectrum resource every time may be 20% or 80% of the one cycle, the field 3 may be set to 1 bit to indicate the time that the terminal device is to spend in using a licensed spectrum resource every time. For example, a value of the 1 bit in the field 3 may be set to 0 to indicate that the time that the terminal device is to spend in using a licensed spectrum resource every time is 20% of the one cycle, and a value of the 1 bit in the field 3 may be set to 1 to indicate that the time that the terminal device is to spend in using a licensed spectrum resource every time is 80% of the one cycle.

Optionally, the field 3 may be used to indicate the time that the terminal device is to spend in using an unlicensed spectrum resource every time. Specifically, a method for using the field 3 to indicate the time that the terminal device is to spend in using an unlicensed spectrum resource every time is similar to the foregoing method for using the field 3 to indicate the time that the terminal device is to spend in using a licensed spectrum resource every time. For a specific method for using the field 3 to indicate the time that the terminal device is to spend in using a licensed spectrum resource every time, refer to the foregoing method for using the field 3 to indicate the time that the terminal device is to spend in using an unlicensed spectrum resource every time. Details are not described herein again.

### Field 4:

In this embodiment of the present invention, because a licensed spectrum resource may be usually divided into a plurality of frequency bands, the field 4 may be set to indicate a frequency band in the licensed spectrum resource. Assuming that the licensed spectrum resource is divided into four frequency bands (for example, a frequency band 1, a frequency band 2, a frequency band 3, and a frequency band 4), the field 4 may be set to 2 bits to indicate any one of the four frequency bands. For example, 00 may be used to indicate the frequency band 1, 01 may be used to indicate the frequency band 2, 10 may be used to indicate the frequency band 3, and 11 may be used to indicate the frequency band 4. The first frequency band in the licensed spectrum resource in this embodiment of the present invention may be any one of the four frequency bands.

The manners of setting the field 1, the field 2, the field 3, and the field 4 and the content indicated by the field 1, the field 2, the field 3, and the field 4 are described merely as examples. In specific implementation, the manners of setting the field 1, the field 2, the field 3, and the field 4 and the content indicated by the field 1, the field 2, the field 3, and the field 4 may be adjusted based on an actual use requirement. This is not limited in the present invention.

It should be noted that for (1), (21), (22), (311), (312), (321), and (322) indicated by the spectrum resource information, (1), (21), and (22) may be specifically implemented by setting the field 1 (in other words, bits in the field 2 and the field 3 may be set to be invalid or blank), and (311), (312), (321), and (322) may be specifically implemented by setting the field 1, the field 2, and the field 3.

Optionally, in this embodiment of the present invention, not only bits may be set in the field 2 and the field 3 to indicate the time that the terminal device is to spend in using a licensed spectrum resource every time and the time that the terminal device is to spend in using an unlicensed spectrum resource every time, but also a value of the time that the terminal device is to spend in using a licensed spectrum resource every time and a value of the time that the terminal device is to spend in using an unlicensed spectrum resource every time may be respectively set in the field 2 and the field 3 to indicate the time that the terminal device is to spend in using a licensed spectrum resource every time and the time that the terminal device is to spend in using an unlicensed spectrum resource every time.

Optionally, not only bits may be set in the field 4 to indicate the first frequency band in the licensed spectrum resource, in this embodiment of the present invention, a value of the first frequency band may be set in the field 4 to indicate the first frequency band in the licensed spectrum resource.

Optionally, in this embodiment of the present invention, when the spectrum resource indication message is used to instruct the terminal device to be handed over from a serving cell of the terminal device or reselect a serving cell of the terminal device, specifically, the field 1 may be set in the spectrum resource indication message to instruct the terminal device to be handed over from a serving cell of the terminal device or reselect a serving cell of the terminal device. Specifically, a method similar to that shown in Table 1 may be used to set values of 3 bits in the field 1 to 111 to instruct the terminal device to be handed over from a serving cell of the terminal device or reselect a serving cell of the terminal device.

S105. The terminal device receives the spectrum resource indication message.

In this embodiment of the present invention, after the terminal device receives the spectrum resource indication message, the terminal device may learn, based on content indicated by the spectrum resource indication message, the spectrum resource information determined by the access network device for the terminal device.

Optionally, when the spectrum resource information is the foregoing (1), the terminal device may learn that the terminal device is to use a licensed spectrum resource. When the terminal device has a service to transmit, the terminal device may request the access network device to allocate the first frequency band in the licensed spectrum resource to the terminal device, so that after the access network device allocates the first frequency band in the licensed spectrum resource to the terminal device, the terminal device can transmit, in the first frequency band, the service to be transmitted by the terminal device.

Optionally, when the spectrum resource information is the foregoing (2), the terminal device may learn that the terminal device is to use an unlicensed spectrum resource, and the manner of using an unlicensed spectrum resource by the terminal device is the LBT manner or the low duty cycle manner. When the terminal device has a service to transmit, the terminal device may directly transmit, on the unlicensed spectrum resource in the LBT manner or the low duty cycle manner, the service to be transmitted by the terminal device.

Optionally, when the spectrum resource information is the foregoing (3), the terminal device may learn the fact that the terminal device is to alternately use a licensed spectrum resource and an unlicensed spectrum resource, the manner of using an unlicensed spectrum resource by the terminal device, namely, the LBT manner or the low duty cycle manner, the time that the terminal device is to spend in using a licensed spectrum resource every time, and the time that the terminal device is to spend in using an unlicensed spectrum resource every time. When the terminal device has a service to transmit, the terminal device may request the access network device to allocate the first frequency band in the licensed spectrum resource to the terminal device, so that after the access network device allocates the first frequency band in the licensed spectrum resource to the terminal device, the terminal device can transmit, in the first frequency band within the time that the terminal device is to spend in using a licensed spectrum resource every time, the service to be transmitted by the terminal device, and can transmit, on the unlicensed spectrum resource in the LBT manner or the low duty cycle manner within the time that the terminal device is to spend in using an unlicensed spectrum resource every time, the service to be transmitted by the terminal device.

Optionally, in this embodiment of the present invention, if the spectrum resource indication message not only indicates the foregoing (1), but also indicates the first frequency band allocated in the licensed spectrum resource by the access network device to the terminal device, when the terminal device has a service to transmit, the terminal device may directly transmit, in the first frequency band, the service to be transmitted by the terminal device.

Optionally, if the spectrum resource indication message not only indicates the foregoing (3), but also indicates the first frequency band allocated in the licensed spectrum resource by the access network device to the terminal device, when the terminal device has a service to transmit, the terminal device can transmit, in the first frequency band within the time that the terminal device is to spend in using a licensed spectrum resource every time, the service to be transmitted by the terminal device, and can transmit, on the unlicensed spectrum resource in the LBT manner or the low duty cycle manner within the time that the terminal device is to spend in using an unlicensed spectrum resource every time, the service to be transmitted by the terminal device.

According to the spectrum resource indication method provided in this embodiment of the present invention, the access network device may obtain the spectrum resource supporting capability of the terminal device and the service requirement of the terminal device, and may determine the spectrum resource information for the terminal device based on the spectrum resource supporting capability of the terminal device and the service requirement of the terminal device, and indicate the spectrum resource information to the terminal device. In this way, the terminal device can transmit, based on the spectrum resource information indicated by the access network device, a service to be transmitted by the terminal device. In this solution, because the access network device may configure different spectrum resource information for different terminal devices in the coverage area of the access network device based on spectrum resource supporting capabilities of the terminal devices and service requirements of the terminal devices, in application of an unlicensed spectrum resource, some terminal devices in a coverage area of a same access network device may contend for a frequency band in the unlicensed spectrum resource in the LBT manner, and other terminal devices may contend for a frequency band in the unlicensed spectrum resource in the low duty cycle manner. In this way, cases in which a plurality of terminal devices simultaneously obtain a same frequency band in the unlicensed spectrum resource through contention can be reduced or avoided, so that data transmission efficiency can be improved.

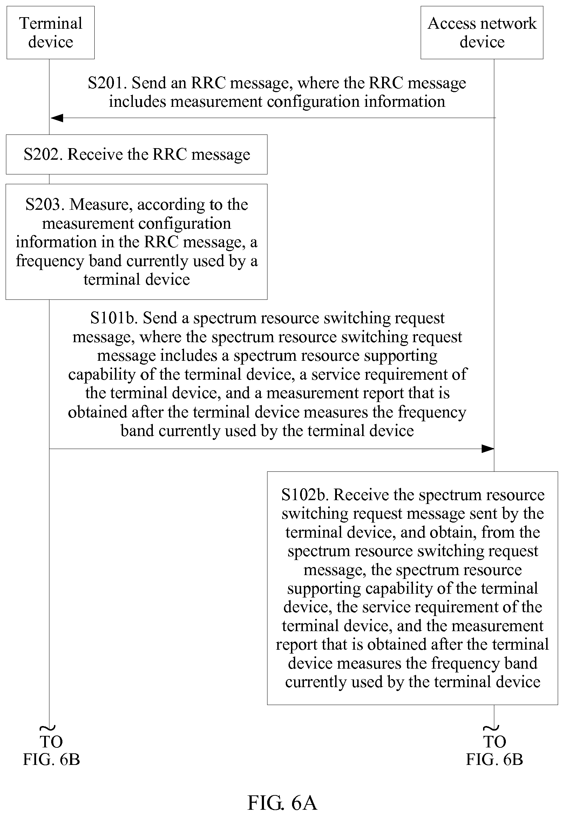

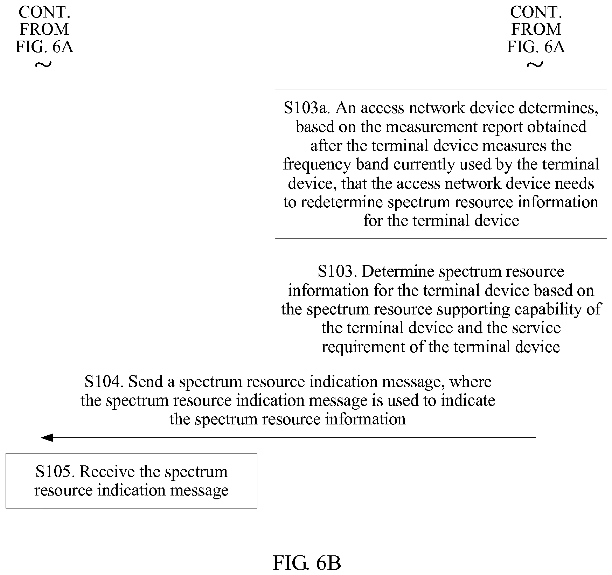

Optionally, referring to FIG. 5, as shown in FIG. 6A and FIG. 6B, before S101a, the spectrum resource indication method provided in this embodiment of the present invention may further include the following steps.

S201. An access network device sends a Radio Resource Control (Radio Resource Control, RRC) message to a terminal device, where the RRC message includes measurement configuration information.

The measurement configuration information is used to instruct the terminal device to measure a frequency band currently used by the terminal device (the frequency band currently used by the terminal device may be a frequency band in a licensed spectrum resource or may be a frequency band in an unlicensed spectrum resource). The measurement configuration information may include a measurement object and measurement content. The measurement object may be the frequency band currently used by the terminal device. The measurement content may be at least one of reference signal received power (reference signal received power, RSRP) and reference signal received quality (reference signal received quality, RSRQ). The RSRP and the RSRQ may separately represent signal transmission quality, or may jointly represent signal transmission quality.

S202. The terminal device receives the RRC message.

S203. The terminal device measures, according to the measurement configuration information in the RRC message, a frequency band currently used by the terminal device.

Optionally, because the measurement content in the measurement configuration information may be at least one of the RSRP and the RSRQ, a measurement report obtained after the terminal device measures, according to the measurement configuration information, the frequency band currently used by the terminal device may include one of the following:
(1a) RSRP of the frequency band currently used by the terminal device;
(2a) RSRQ of the frequency band currently used by the terminal device; and
(3a) RSRP of the frequency band currently used by the terminal device and RSRQ of the frequency band currently used by the terminal device.

As shown in FIG. 6A and FIG. 6B, after S203, the terminal device may add, to a spectrum resource switching request message, the measurement report obtained after the terminal device measures the frequency band currently used by the terminal device, and send the spectrum resource switching request message to the access network device. In other words, S101a and S102a may be specifically replaced with S101b and S102b.

S101b. The terminal device sends a spectrum resource switching request message to the access network device, where the spectrum resource switching request message includes a spectrum resource supporting capability of the terminal device, a service requirement of the terminal device, and a measurement report that is obtained after the terminal device measures the frequency band currently used by the terminal device.

S102b. The access network device receives the spectrum resource switching request message sent by the terminal device, and obtains, from the spectrum resource switching request message, the spectrum resource supporting capability of the terminal device, the service requirement of the terminal device, and the measurement report that is obtained after the terminal device measures the frequency band currently used by the terminal device.

Optionally, after the access network device receives the spectrum resource switching request message sent by the terminal device, the access network device may obtain, from the spectrum resource switching request message, the spectrum resource supporting capability of the terminal device, the service requirement of the terminal device, and the measurement report that is obtained after the terminal device measures the frequency band currently used by the terminal device.

As shown in FIG. 6A and FIG. 6B, after S102b, before S103, the spectrum resource indication method provided in this embodiment of the present invention may further include S103a.

S103a. The access network device determines, based on the measurement report obtained after the terminal device measures the frequency band currently used by the terminal device, that the access network device needs to redetermine spectrum resource information for the terminal device.

Optionally, the access network device may determine, based on the measurement report obtained after the terminal device measures the frequency band currently used by the terminal device, whether the access network device needs to redetermine spectrum resource information for the terminal device. Specifically, the determining, by the access network device, whether the access network device needs to redetermine spectrum resource information for the terminal device may include the following three cases:
Case a: When the measurement report is the foregoing (1a), the access network device may learn, from the measurement report, the RSRP of the frequency band currently used by the terminal device, and determine whether the RSRP of the frequency band currently used by the terminal device is less than or equal to a preset first threshold. When the RSRP of the frequency band currently used by the terminal device is less than or equal to the preset first threshold, signal transmission quality of the frequency band currently used by the terminal device is relatively poor, and the access network device needs to redetermine spectrum resource information for the terminal device. When the RSRP of the frequency band currently used by the terminal device is greater than the preset first threshold, signal transmission quality of the frequency band currently used by the terminal device is relatively good, and the access network device does not need to redetermine spectrum resource information for the terminal device.
Case b: When the measurement report is the foregoing (1b), the access network device may learn, from the measurement report, the RSRQ of the frequency band currently used by the terminal device, and determine whether the RSRQ of the frequency band currently used by the terminal device is less than or equal to a preset second threshold. When the RSRQ of the frequency band currently used by the terminal device is less than or equal to the preset first threshold, signal transmission quality of the frequency band currently used by the terminal device is relatively poor, and the access network device needs to redetermine spectrum resource information for the terminal device. When the RSRQ of the frequency band currently used by the terminal device is greater than the preset first threshold, signal transmission quality of the frequency band currently used by the terminal device is relatively good, and the access network device does not need to redetermine spectrum resource information for the terminal device.
Case c: When the measurement report is the foregoing (1c), the access network device may learn, from the measurement report, the RSRP of the frequency band currently used by the terminal device and the RSRQ of the frequency band currently used by the terminal device (namely, signal transmission quality of the frequency band currently used by the terminal device), determine whether the RSRP of the frequency band currently used by the terminal device is less than or equal to a preset first threshold, and determine whether the RSRQ of the frequency band currently used by the terminal device is less than or equal to a preset second threshold. When the RSRP of the frequency band currently used by the terminal device is less than or equal to the preset first threshold and the RSRQ of the frequency band currently used by the terminal device is less than or equal to the preset second threshold, the signal transmission quality of the frequency band currently used by the terminal device is relatively poor, and the access network device needs to redetermine spectrum resource information for the terminal device. When the RSRP of the frequency band currently used by the terminal device is greater than the preset first threshold or the RSRQ of the frequency band currently used by the terminal device is greater than the preset second threshold, the signal transmission quality of the frequency band currently used by the terminal device is relatively good, and the access network device does not need to redetermine spectrum resource information for the terminal device.

It should be noted that the frequency band currently used by the terminal device may be a frequency band in a licensed spectrum resource or a frequency band in an unlicensed spectrum resource.

Optionally, when the access network device determines that the access network device needs to redetermine spectrum resource information for the terminal device, the access network device may redetermine spectrum resource information for the terminal device based on the spectrum resource supporting capability of the terminal device and the service requirement of the terminal device. For a specific method for redetermining spectrum resource information for the terminal device based on the spectrum resource supporting capability of the terminal device and the service requirement of the terminal device, refer to related description in S103 in the foregoing embodiment. Details are not described herein again.

In this embodiment of the present invention, before the terminal device sends the spectrum resource switching request message to the access network device, the terminal device may further receive the RRC message that is sent by the access network device and includes the measurement configuration information used to instruct the terminal device to measure the frequency band currently used by the terminal device. Therefore, after the terminal device measures the frequency band currently used by the terminal device, the terminal device may add the measurement report obtained through the measurement to the spectrum resource switching request message and send the spectrum resource switching request message to the access network device. In this case, the access network device may learn, based on the measurement report, the signal transmission quality of the frequency band currently used by the terminal device; determine, based on the signal transmission quality of the frequency band currently used by the terminal device, whether the access network device needs to redetermine spectrum resource information for the terminal device; and when the signal transmission quality of the frequency band currently used by the terminal device is relatively poor (for example, the signal transmission quality of the frequency band currently used by the terminal device is less than or equal to a preset threshold), redetermine spectrum resource information for the terminal device based on the spectrum resource supporting capability of the terminal device and the service requirement of the terminal device. In this way, when the signal transmission quality of the frequency band currently used by the terminal device is relatively poor, new spectrum resource information can be redetermined for the terminal device in a timely manner, so that data transmission efficiency of the terminal device is ensured.

In the embodiments of the present invention, the access network device and the terminal device may be divided into function modules based on the foregoing method embodiments. For example, each function module may be obtained through division based on a corresponding function, or two or more functions may be integrated into one processing module. The integrated module may be implemented in a form of hardware, or may be implemented in a form of a software function module. It should be noted that the module division in the embodiments of the present invention is an example, and is merely logical function division. There may be another division manner in actual implementation.

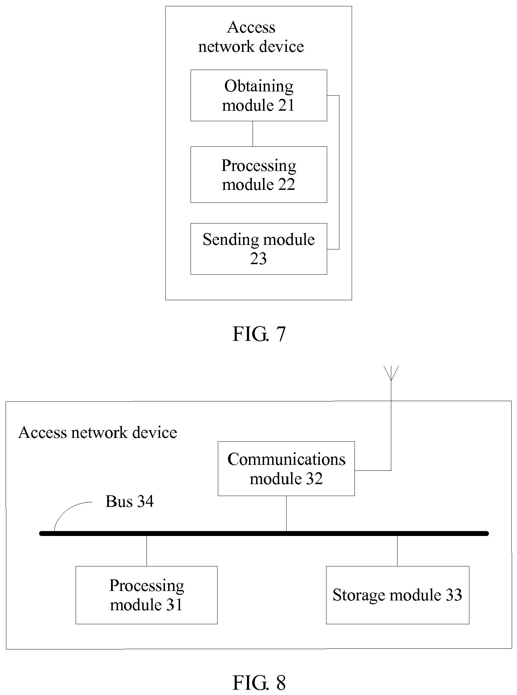

For example, when each function module is obtained through division based on a corresponding function, FIG. 7 is a schematic structural diagram of an access network device according to an embodiment of the present invention. In FIG. 7, the access network device includes an obtaining module 21, a processing module 22, and a sending module 23.

The obtaining module 21 is configured to support the access network device in performing S102 (including S102a or S102b) in the foregoing method embodiment. The processing module 22 is configured to support the access network device in performing S103 and S103a in the foregoing method embodiment. The sending module 23 is configured to support the access network device in performing S104 and S201 in the foregoing method embodiments.

The obtaining module 21, the processing module 22, and the sending module 23 may be further configured to perform other processes in the technology described in this specification.

It should be noted that all related content of each step in the foregoing method embodiments may be cited in function description of a corresponding function module. Details are not described herein.

For example, when an integrated unit is used, FIG. 8 is a schematic structural diagram of an access network device according to an embodiment of the present invention. In FIG. 8, the access network device includes a processing module 31 and a communications module 32. The processing module 31 is configured to control and manage actions of the access network device, for example, perform the steps performed by the obtaining module 21 and the processing module 22, and/or is configured to perform other processes in the technology described in this specification. The communications module 32 is configured to support interaction between the access network device and another device, for example, perform the steps performed by the sending module 23. As shown in FIG. 8, the access network device may further include a storage module 33 and a bus 34. The storage module 33 is configured to store program code and data of the access network device.

The processing module 31 may be a processor or a controller in the access network device. The processor or the controller may be the baseband processing unit in the base station shown in FIG. 2. The processor or the controller may implement or execute various example logical blocks, modules, and circuits described with reference to content disclosed in the present invention. The processor or the controller may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor or the controller may implement or execute various example logical blocks, modules, and circuits described with reference to content disclosed in the present invention. Alternatively, the processor may be a combination of processors implementing a computing function, for example, a combination of one or more microprocessors, or a combination of the DSP and a microprocessor.

The communications module 32 may be a transceiver, a transceiver circuit, a communications interface, or the like in the access network device. The transceiver, the transceiver circuit, the communications interface, or the like may be the antenna in the base station shown in FIG. 2.

The storage module 33 may be a memory or the like in the access network device. The memory may include a volatile memory (volatile memory), for example, a random access memory (random access memory, RAM). Alternatively, the memory may include a non-volatile memory (non-volatile memory), for example, a read-only memory (read-only memory, ROM), a flash memory (flash memory), a hard disk drive (hard disk drive, HDD), or a solid-state drive (solid-state drive, SSD). Alternatively, the memory may include a combination of the foregoing types of memories.

The bus 34 may be a peripheral component interconnect (peripheral component interconnect, PCI) bus, an extended industry standard architecture (extended industry standard architecture, EISA) bus, or the like. The bus 34 may be classified into an address bus, a data bus, a control bus, and the like. For ease of representation, only one thick line is used to represent the bus in FIG. 8, but this does not mean that there is only one bus or only one type of bus.

An embodiment of the present invention further provides a computer readable storage medium. The computer readable storage medium stores one or more programs, and the one or more programs include a computer executable instruction. When the processor or the controller in the access network device executes the computer executable instruction, the access network device performs the steps performed by the access network device in the method procedures shown in the foregoing method embodiments.

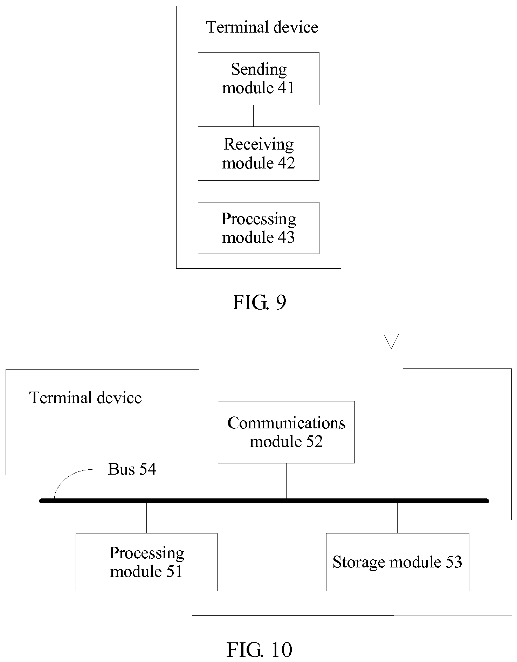

For example, when each function module is obtained through division based on a corresponding function, FIG. 9 is a schematic structural diagram of a terminal device according to an embodiment of the present invention. In FIG. 9, the terminal device includes a sending module 41, a receiving module 42, and a processing module 43.

The sending module 41 is configured to support the terminal device in performing S101 (including SlOla or S101b) in the foregoing method embodiment. The receiving module 42 is configured to support the terminal device in performing S105 and S202 in the foregoing method embodiments. The processing module 43 is configured to support the terminal device in performing S203 in the foregoing method embodiment.

The sending module 41, the receiving module 42, and the processing module 43 may be further configured to perform other processes in the technology described in this specification.

It should be noted that all related content of each step in the foregoing method embodiments may be cited in function description of a corresponding function module. Details are not described herein.

For example, when an integrated unit is used, FIG. 10 is a schematic structural diagram of a terminal device according to an embodiment of the present invention. In FIG. 10, the terminal device includes a processing module 51 and a communications module 52. The processing module 51 is configured to control and manage actions of the terminal device, for example, perform the steps performed by the processing module 43, and/or is configured to perform other processes in the technology described in this specification. The communications module 52 is configured to support interaction between the terminal device and another device, for example, perform the steps performed by the sending module 41 and the receiving module 42. As shown in FIG. 8, the terminal device may further include a storage module 53 and a bus 54. The storage module 53 is configured to store program code and data of the terminal device.

The processing module 51 may be a processor or a controller in the terminal device. The processor or the controller may be the processor 11 in the mobile phone shown in FIG. 3. The processor or the controller may implement or execute various example logical blocks, modules, and circuits described with reference to content disclosed in the present invention. The processor or the controller may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor or the controller may implement or execute various example logical blocks, modules, and circuits described with reference to content disclosed in the present invention. Alternatively, the processor may be a combination of processors implementing a computing function, for example, a combination of one or more microprocessors, or a combination of the DSP and a microprocessor.

The communications module 52 may be a transceiver, a transceiver circuit, a communications interface, or the like in the terminal device. The transceiver, the transceiver circuit, the communications interface, or the like may be the RF circuit 12 in the mobile phone shown in FIG. 3.

The storage module 53 may be a memory or the like in the terminal device. The memory may be the memory 14 in the mobile phone shown in FIG. 3. The memory may include a volatile memory (volatile memory), for example, a random access memory (random access memory, RAM). Alternatively, the memory may include a non-volatile memory (non-volatile memory), for example, a read-only memory (read-only memory, ROM), a flash memory (flash memory), a hard disk drive (hard disk drive, HDD), or a solid-state drive (solid-state drive, SSD). Alternatively, the memory may include a combination of the foregoing types of memories.

The bus 54 may be a peripheral component interconnect (peripheral component interconnect, PCI) bus, an extended industry standard architecture (extended industry standard architecture, EISA) bus, or the like. The bus 54 may be classified into an address bus, a data bus, a control bus, and the like. For ease of representation, only one thick line is used to represent the bus in FIG. 10, but this does not mean that there is only one bus or only one type of bus.

An embodiment of the present invention further provides a computer readable storage medium. The computer readable storage medium stores one or more programs, and the one or more programs include a computer executable instruction. When the processor or the controller in the terminal device executes the computer executable instruction, the terminal device performs the steps performed by the terminal device in the method procedures shown in the foregoing method embodiments.

An embodiment of the present invention provides a wireless communications system. The wireless communications system may include an access network device and a terminal device. For a specific network architecture of the wireless communications system provided in this embodiment of the present invention, refer to the schematic diagram of the network architecture of the wireless communications system shown in FIG. 1. The access network device may be the access network device shown in FIG. 1, and the terminal device may be the terminal device shown in FIG. 1. For detailed description of the access network device and the terminal device, refer to related description in the foregoing method embodiments and apparatus embodiments. Details are not described herein again.

According to the wireless communications system provided in this embodiment of the present invention, the access network device may obtain a spectrum resource supporting capability of the terminal device and a service requirement of the terminal device, and may determine spectrum resource information for the terminal device based on the spectrum resource supporting capability of the terminal device and the service requirement of the terminal device, and indicate the spectrum resource information to the terminal device. In this way, the terminal device can transmit, based on the spectrum resource information indicated by the access network device, a service to be transmitted by the terminal device. In this solution, because the access network device may configure different spectrum resource information for different terminal devices in a coverage area of the access network device based on spectrum resource supporting capabilities of the terminal devices and service requirements of the terminal devices, in application of an unlicensed spectrum resource, some terminal devices in a coverage area of a same access network device may contend for a frequency band in the unlicensed spectrum resource in an LBT manner, and other terminal devices may contend for a frequency band in the unlicensed spectrum resource in a low duty cycle manner. In this way, cases in which a plurality of terminal devices simultaneously obtain a same frequency band in the unlicensed spectrum resource through contention can be reduced or avoided, so that data transmission efficiency can be improved.

Method or algorithm steps described in combination with the content disclosed in the present invention may be implemented by hardware, or may be implemented by a processor by executing a software instruction. The software instruction may include a corresponding software module. The software module may be stored in a RAM, a flash memory, a ROM, an erasable programmable read only memory (erasable programmable ROM, EPROM), an electrically erasable programmable read only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in the ASIC.

The foregoing description about implementations allows a person skilled in the art to understand that, for the purpose of convenient and brief description, division of the foregoing function modules is taken as an example for illustration. In actual application, the foregoing functions can be allocated to different modules and implemented based on a requirement, in other words, an inner structure of an apparatus is divided into different function modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, a network device, or the like) to perform all or some of the steps of the methods described in the embodiments of the present invention. The foregoing storage medium includes any medium that can store program code, such as a flash memory, a removable hard disk, a read-only memory, a random access memory, a magnetic disk, or an optical disc.

The foregoing description is merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A spectrum resource indication method, comprising:
obtaining, by an access network device, a spectrum resource supporting capability of a terminal device and a service requirement of the terminal device;
determining, by the access network device, spectrum resource information for the terminal device based on the capability and the service requirement; and
sending, by the access network device, a spectrum resource indication message to the terminal device, wherein the spectrum resource indication message is used to indicate the spectrum resource information.

2. The method according to claim 1, wherein
the spectrum resource information comprises a fact that the terminal device is to use a licensed spectrum resource; or
the spectrum resource information comprises a fact that the terminal device is to use an unlicensed spectrum resource and a manner of using an unlicensed spectrum resource by the terminal device; or
the spectrum resource information comprises a fact that the terminal device is to alternately use a licensed spectrum resource and an unlicensed spectrum resource, a manner of using an unlicensed spectrum resource by the terminal device, a time that the terminal device is to spend in using a licensed spectrum resource every time, and a time that the terminal device is to spend in using an unlicensed spectrum resource every time.

3. The method according to claim 1 or 2, wherein
the capability comprises a capability that the terminal device supports an unlicensed spectrum resource and a manner, supported by the terminal device, of using an unlicensed spectrum resource; or
the capability comprises a capability that the terminal device supports a licensed spectrum resource, a capability that the terminal device supports an unlicensed spectrum resource, and a manner, supported by the terminal device, of using an unlicensed spectrum resource.

4. The method according to claim 2 or 3, wherein the service requirement comprises at least a transmission delay requirement of a service historically transmitted by the terminal device, and the method comprises:
determining, by the access network device, that the terminal device is to use an unlicensed spectrum resource or alternately use a licensed spectrum resource and an unlicensed spectrum resource; and
determining, by the access network device based on the transmission delay requirement of the service historically transmitted by the terminal device, that the manner of using an unlicensed spectrum resource by the terminal device is a listen before talk LBT manner or a low duty cycle manner.

5. The method according to any one of claims 1 to 4, wherein the obtaining, by an access network device, a spectrum resource supporting capability of a terminal device and a service requirement of the terminal device comprises:
receiving, by the access network device, a spectrum resource switching request message sent by the terminal device, wherein the spectrum resource switching request message comprises the spectrum resource supporting capability of the terminal device and the service requirement of the terminal device.

6. The method according to claim 5, wherein the spectrum resource switching request message further comprises a measurement report obtained after the terminal device measures a frequency band currently used by the terminal device; and
before the receiving, by the access network device, a spectrum resource switching request message sent by the terminal device, the method further comprises:
sending, by the access network device, a Radio Resource Control RRC message to the terminal device, wherein the RRC message comprises measurement configuration information, and the measurement configuration information is used to instruct the terminal device to measure the frequency band currently used by the terminal device.

7. The method according to any one of claims 1 to 6, wherein
the spectrum resource information comprises the fact that the terminal device is to use a licensed spectrum resource; and
when a quantity of terminal devices using the licensed spectrum resource reaches a preset threshold, the spectrum resource indication message is specifically used to instruct the terminal device to be handed over from a serving cell of the terminal device or reselect a serving cell of the terminal device.

8. The method according to claim 3 or 4, wherein the determining, by the access network device, spectrum resource information for the terminal device based on the capability and the service requirement comprises:
determining, by the access network device based on the capability, that the terminal device supports a licensed spectrum resource and an unlicensed spectrum resource, and the manner, supported by the terminal device, of using an unlicensed spectrum resource comprises the LBT manner and the low duty cycle manner; and
determining, by the access network device based on the service requirement, the fact that the terminal device is to use a licensed spectrum resource, or the fact that the terminal device is to use an unlicensed spectrum resource and the manner of using an unlicensed spectrum resource, or the fact that the terminal device is to alternately use a licensed spectrum resource and an unlicensed spectrum resource and the manner of using an unlicensed spectrum resource, wherein the manner of using an unlicensed spectrum resource by the terminal device is the LBT manner or the low duty cycle manner.

9. A spectrum resource indication method, comprising:
sending, by a terminal device, a spectrum resource supporting capability of the terminal device and a service requirement of the terminal device to an access network device, wherein the capability and the service requirement are used by the access network device to determine spectrum resource information for the terminal device; and
receiving, by the terminal device, a spectrum resource indication message sent by the access network device, wherein the spectrum resource indication message is used to indicate the spectrum resource information.

10. The method according to claim 9, wherein
the spectrum resource information comprises a fact that the terminal device is to use a licensed spectrum resource; or
the spectrum resource information comprises a fact that the terminal device is to use an unlicensed spectrum resource and a manner of using an unlicensed spectrum resource by the terminal device; or
the spectrum resource information comprises a fact that the terminal device is to alternately use a licensed spectrum resource and an unlicensed spectrum resource, a manner of using an unlicensed spectrum resource by the terminal device, a time that the terminal device is to spend in using a licensed spectrum resource every time, and a time that the terminal device is to spend in using an unlicensed spectrum resource every time.

11. The method according to claim 9 or 10, wherein
the capability comprises a capability that the terminal device supports an unlicensed spectrum resource and a manner, supported by the terminal device, of using an unlicensed spectrum resource; or
the capability comprises a capability that the terminal device supports a licensed spectrum resource, a capability that the terminal device supports an unlicensed spectrum resource, and a manner, supported by the terminal device, of using an unlicensed spectrum resource.

12. The method according to any one of claims 9 to 11, wherein the sending, by a terminal device, a spectrum resource supporting capability of the terminal device and a service requirement of the terminal device to an access network device comprises:
sending, by the terminal device, a spectrum resource switching request message to the access network device, wherein the spectrum resource switching request message comprises the spectrum resource supporting capability of the terminal device and the service requirement of the terminal device.

13. The method according to claim 12, wherein the spectrum resource switching request message further comprises a measurement report obtained after the terminal device measures a frequency band currently used by the terminal device; and
before the sending, by the terminal device, a spectrum resource switching request message to the access network device, the method further comprises:
receiving, by the terminal device, a Radio Resource Control RRC message sent by the access network device, wherein the RRC message comprises measurement configuration information, and the measurement configuration information is used to instruct the terminal device to measure the frequency band currently used by the terminal device; and
measuring, by the terminal device according to the measurement configuration information, the frequency band currently used by the terminal device.

14. The method according to any one of claims 9 to 13, wherein
the spectrum resource information comprises the fact that the terminal device is to use a licensed spectrum resource; and
when a quantity of terminal devices using the licensed spectrum resource reaches a preset threshold, the spectrum resource indication message is specifically used to instruct the terminal device to be handed over from a serving cell of the terminal device or reselect a serving cell of the terminal device.

15. An access network device, wherein the access network device comprises:
an obtaining module, configured to obtain a spectrum resource supporting capability of a terminal device and a service requirement of the terminal device;
a processing module, configured to determine spectrum resource information for the terminal device based on the capability and the service requirement that are obtained by the obtaining module; and
a sending module, configured to send a spectrum resource indication message to the terminal device, wherein the spectrum resource indication message is used to indicate the spectrum resource information determined by the processing module.

16. The access network device according to claim 15, wherein
the spectrum resource information comprises a fact that the terminal device is to use a licensed spectrum resource; or
the spectrum resource information comprises a fact that the terminal device is to use an unlicensed spectrum resource and a manner of using an unlicensed spectrum resource by the terminal device; or
the spectrum resource information comprises a fact that the terminal device is to alternately use a licensed spectrum resource and an unlicensed spectrum resource, a manner of using an unlicensed spectrum resource by the terminal device, a time that the terminal device is to spend in using a licensed spectrum resource every time, and a time that the terminal device is to spend in using an unlicensed spectrum resource every time.

17. The access network device according to claim 15 or 16, wherein
the capability comprises a capability that the terminal device supports an unlicensed spectrum resource and a manner, supported by the terminal device, of using an unlicensed spectrum resource; or
the capability comprises a capability that the terminal device supports a licensed spectrum resource, a capability that the terminal device supports an unlicensed spectrum resource, and a manner, supported by the terminal device, of using an unlicensed spectrum resource.

18. The access network device according to claim 16 or 17, wherein the service requirement comprises at least a transmission delay requirement of a service historically transmitted by the terminal device; and
the processing module is further configured to: determine that the terminal device is to use an unlicensed spectrum resource or alternately use a licensed spectrum resource and an unlicensed spectrum resource; and determine, based on the transmission delay requirement of the service historically transmitted by the terminal device, that the manner of using an unlicensed spectrum resource by the terminal device is a listen before talk LBT manner or a low duty cycle manner.

19. The access network device according to any one of claims 15 to 18, wherein the obtaining module is specifically configured to receive a spectrum resource switching request message sent by the terminal device, wherein the spectrum resource switching request message comprises the spectrum resource supporting capability of the terminal device and the service requirement of the terminal device.

20. The access network device according to claim 19, wherein the spectrum resource switching request message further comprises a measurement report obtained after the terminal device measures a frequency band currently used by the terminal device; and
the sending module is further configured to: before the obtaining module receives the spectrum resource switching request message sent by the terminal device, send a Radio Resource Control RRC message to the terminal device, wherein the RRC message comprises measurement configuration information, and the measurement configuration information is used to instruct the terminal device to measure the frequency band currently used by the terminal device.

21. The access network device according to any one of claims 15 to 20, wherein the spectrum resource information comprises the fact that the terminal device is to use a licensed spectrum resource; and
when a quantity of terminal devices using the licensed spectrum resource reaches a preset threshold, the spectrum resource indication message is specifically used to instruct the terminal device to be handed over from a serving cell of the terminal device or reselect a serving cell of the terminal device.

22. The access network device according to claim 20 or 21, wherein the processing module is specifically configured to: determine, based on the capability, that the terminal device supports a licensed spectrum resource and an unlicensed spectrum resource, and the manner, supported by the terminal device, of using an unlicensed spectrum resource comprises the LBT manner and the low duty cycle manner; and determine, based on the service requirement, the fact that the terminal device is to use a licensed spectrum resource, or the fact that the terminal device is to use an unlicensed spectrum resource and the manner of using an unlicensed spectrum resource, or the fact that the terminal device is to alternately use a licensed spectrum resource and an unlicensed spectrum resource and the manner of using an unlicensed spectrum resource, wherein the manner of using an unlicensed spectrum resource by the terminal device is the LBT manner or the low duty cycle manner.

23. A terminal device, wherein the terminal device comprises:
a sending module, configured to send a spectrum resource supporting capability of the terminal device and a service requirement of the terminal device to an access network device, wherein the capability and the service requirement are used by the access network device to determine spectrum resource information for the terminal device; and
a receiving module, configured to receive a spectrum resource indication message sent by the access network device, wherein the spectrum resource indication message is used to indicate the spectrum resource information.

24. The terminal device according to claim 23, wherein
the spectrum resource information comprises a fact that the terminal device is to use a licensed spectrum resource; or
the spectrum resource information comprises a fact that the terminal device is to use an unlicensed spectrum resource and a manner of using an unlicensed spectrum resource by the terminal device; or
the spectrum resource information comprises a fact that the terminal device is to alternately use a licensed spectrum resource and an unlicensed spectrum resource, a manner of using an unlicensed spectrum resource by the terminal device, a time that the terminal device is to spend in using a licensed spectrum resource every time, and a time that the terminal device is to spend in using an unlicensed spectrum resource every time.

25. The terminal device according to claim 23 or 24, wherein
the capability comprises a capability that the terminal device supports an unlicensed spectrum resource and a manner, supported by the terminal device, of using an unlicensed spectrum resource; or
the capability comprises a capability that the terminal device supports a licensed spectrum resource, a capability that the terminal device supports an unlicensed spectrum resource, and a manner, supported by the terminal device, of using an unlicensed spectrum resource.

26. The terminal device according to any one of claims 23 to 25, wherein the sending module is specifically configured to send a spectrum resource switching request message to the access network device, wherein the spectrum resource switching request message comprises the spectrum resource supporting capability of the terminal device and the service requirement of the terminal device.

27. The terminal device according to claim 26, wherein the spectrum resource switching request message further comprises a measurement report obtained after the terminal device measures a frequency band currently used by the terminal device, and the terminal device further comprises a processing module;
the receiving module is further configured to: before the sending module sends the spectrum resource switching request message to the access network device, receive a Radio Resource Control RRC message sent by the access network device, wherein the RRC message comprises measurement configuration information, and the measurement configuration information is used to instruct the terminal device to measure the frequency band currently used by the terminal device; and
the processing module is configured to: after the receiving module receives the RRC message, measure, according to the measurement configuration information in the RRC message, the frequency band currently used by the terminal device.

28. The terminal device according to any one of claims 23 to 27, wherein the spectrum resource information comprises the fact that the terminal device is to use a licensed spectrum resource; and
when a quantity of terminal devices using the licensed spectrum resource reaches a preset threshold, the spectrum resource indication message is specifically used to instruct the terminal device to be handed over from a serving cell of the terminal device or reselect a serving cell of the terminal device.

29. An access network device, comprising a processor, a transceiver, and a memory, wherein
the memory is configured to store a computer executable instruction, and when the access network device runs, the processor executes the computer executable instruction stored in the memory, so that the access network device performs the spectrum resource indication method according to any one of claims 1 to 8.

30. A terminal device, comprising a processor, a transceiver, and a memory, wherein
the memory is configured to store a computer executable instruction, and when the terminal device runs, the processor executes the computer executable instruction stored in the memory, so that the terminal device performs the spectrum resource indication method according to any one of claims 9 to 14.

31. A wireless communications system, comprising the access network device according to claim 29 or any one of claims 15 to 22 and the terminal device according to claim 30 or any one of claims 23 to 28.
